# EUROPEAN PATENT SPECIFICATION

(11) **EP 2 826 677 B1**
(45) Date of publication and mention of the grant of the patent: **06.04.2016**
(21) Application number: 14177259.0
(22) Date of filing: 16.07.2014
(51) Int. Cl.: B60R 22/195, B60N 2/427

(54) **Vehicle seat**
Fahrzeugsitz
Siège de véhicule

(30) Priority: 18.07.2013 JP 2013149002
(43) Date of publication of application: 21.01.2015
(73) Proprietor: Tachi-S Co., Ltd., Akishima-shi, Tokyo 196-8611 (JP)
(72) Inventor: Tanaka, Koji, Tokyo 107-8508 (JP); Nozu, Hiroshi, Tokyo 107-8508 (JP); Tanji, Hiromasa, Tokyo 107-8508 (JP); Ichida, Atsushi, Tokyo 107-8508 (JP); Tobata, Hideo, Tokyo 196-8611 (JP); Koike, Atsushi, Tokyo 196-8611 (JP)
(74) Representative: Prüfer & Partner mbB Patentanwälte · Rechtsanwälte

(56) References cited:
- WO-A1-01/41525
- DE-A1- 19 859 197
- JP-A- 2004 237 819

## Description

### BACKGROUND OF THE INVENTION

### 1. Field of the Invention

This invention relates to a vehicle seat designed to control a so-called submarine phenomenon, i.e., forward motion the occupant wearing the seat belt may undergo at, for example, an emergency.

### 2. Description of the Related Art

Most vehicle seats have a seat belt (i.e., three-point holding seat belt) configured to hold the occupant at three points, i.e., the left or right shoulder, the left side of the waist, and the right side of the waist. The three-point holding seat belt has an upper-half webbing (shoulder webbing) and a lower-half webbing (lap webbing). The configuration of the three-point holding seat belt is well known. A retractor, which has taken up a webbing with a traction force and stores the webbing so taken up, is incorporated in, for example, in a pillar of the chassis. The distal end of the webbing is fastened to a wrap anchor. The tongue fastened to the webbing may be held with hand and pulled out from the retractor, and be inserted into the buckle secured to one side of the seat cushion. Then, the tongue may be released from the hand. In this case, the webbing is taken up with the traction force of the retractor and is no longer slack. Thereafter, the occupant may be pulled by the upper-half webbing, extending from one shoulder to the hip diagonally opposite to the shoulder, and be pulled by, at the same time, the lower-half webbing from that hip to the other hip, thereby fastening himself to the seat.

The buckle of the seat belt (i.e., three-point holding seat belt) stands on the seat cushion, at a position where it can rise from, for example, the seat raiser. Therefore, the tongue can be inserted into the buckle with a one-touch action, enabling the occupant to wrap the seat belt around him with one hand.

If the vehicle is abruptly decelerated, is suddenly stopped or collides with the vehicle running before it, inertial force will act on the occupant to move him forward. The inertial force may feed the seat belt from the retractor, inevitably slackening the seat belt. In view of this, a configuration has been invented, in which a pre-tensioner (buckle pretensioner) pulls the buckle at an emergency, tightening the seat belt, not slackening it at all, thereby to hold the occupant on the seat, ultimately to prevent the occupant from moving forward, despite the inertial force acting on the occupant at the emergency (refer to, for example, JP 2009-173103A).

Another configuration is known in the art, in which the pre-tensioner (lap pre-tensioner) pulls the lap anchor at an emergency, tightening the seat belt, without slackening it, thereby to hold the occupant steadily (refer to, for example, JP 2010-012887A).

Any buckle pre-tensioner pulls the buckle, drawing the shoulder webbing and the lap webbing at the same time. Any lap pre-tensioner pulls the lap anchor, directly drawing the lap webbing and indirectly drawing the shoulder webbing. The buckle pre-tensioner and the lap pre-tensioner do not differ in function, nonetheless. Both pull the seat belt, tightening the seat belt, not slackening it at all, thereby to hold the occupant on the seat and prevent him from moving forward in spite of the inertial force acting on him at an emergency.

The buckle pre-tensioner and the lap pre-tensioner are identical in basic structure. As well known, the pre-tensioner of either type is provided at the chassis support member (seat raiser) and connected to the buckle or lap anchor by a wire. Both the buckle pre-tensioner and the lap pre-tensioner are designed to actuate an inflator (micro gas generator (MGG)) which generates high-pressure gas at an emergency, supplying the gas to a cylinder. In the cylinder, the gas pushes the piston, which slides and pulls the wire connected to it. As a result, the wire pulls the buckle or one end of the lap webbing.

As pointed out, the seat belt may fail to prevent the so-called submarine phenomenon, i.e., forward motion the occupant wearing the seat belt may undergo at an emergency, with his buttocks sinking in the seat cushion.

A configuration is known, which is designed to control the submarine phenomenon, i.e., forward sliding, at the buttocks, of the occupant wearing the seat belt may undergo at an emergency. In this configuration, a slide control member is provided beneath the seat pad, extending between the left and right side frame and positioned at a midpoint between the front and rear of the seat cushion. In most cases, the slide control member is arranged at a position (low position), not to impair the comfortableness of the vehicle seat. At an emergency, the slide control member rises, pushing up the seat pad in front of the occupant's buttocks, controlling the submarine phenomenon.

JP 2002-046513A, for example, discloses a vehicle seat, in which a cross member having a foldable part extends between the left and right side frames of the seat cushion. In the normal state, the foldable part of the cross member is bent with the pressure the occupant applies to it. When the occupant's buttocks move forward at an emergency, however, the foldable part rises, pushing up the seat pad and thus controlling the submarine phenomenon.

Further, JP 2004-237820A discloses a vehicle seat, in which an elastic band used as control member extends beneath the seat pad and between the left and right side frames of the seat cushion. A traction device having an inflator is connected to an end of the elastic band hanging along the side frames. At an emergency, the inflator causes the traction device to pull the ends of the elastic band in both the leftward direction and the rightward direction. The traction device therefore lifts the elastic band, pushing up the seat pad. As a result, the seat pad rises in front of the occupant's buttocks, controlling the submarine phenomenon.

In the vehicle seat disclosed in JP 2002-046513A, the cross member is hard, formed of, for example, a steel plate. Therefore, if the cross member is positioned near the upper surface of the seat pad, it can push the seat pad upwards much enough to control the submarine phenomenon at an emergency. While the vehicle is running in normal state, however, the occupant perceives the existence of the cross member and feels somewhat uncomfortable. In order to make the occupant feel comfortable while the vehicle is running in normal state, the cross member may be arranged much apart from the seat pad. If so arranged, however, the cross member cannot push up the seat pad sufficiently, possibly failing to control the submarine phenomenon at an emergency.

In the vehicle seat disclosed in JP 2004-237820A, an elastic band (soft piece) made of elastomer sheet is used as control member. Inevitably, the band can hardly be perceived through the seat pad even while the vehicle is running in normal state. Since the band is arranged on the lower surface of the seat pad, it is sufficiently spaced from the upper surface of the seat pad. This ensures comfort to the occupant. At an emergency, the traction device pulls the band, fast stretching and lifting the band. The band can therefore sufficiently control the submarine phenomenon.

One traction device is arranged below the seat cushion and in parallel to the band, crossing the seat cushion. Thus, the traction device pulls the band at both ends, to the left and the right, respectively. Since one traction device pulls the band at both ends, the vehicle seat is inevitably complex in configuration. To pull the band to both the left and the right ends, the traction device should better be arranged in parallel to the band. This will limit the positioning of the traction device.

From WO 01/41525 A1, which shows the preamble of claim 1, a vehicle seat is known that comprises a seat cushion having a seat pad and a pair of side frames supporting the seat pad from the left and right sides. A band extends between the side frames and is at one end secured to one of the side frames. The vehicle seat further comprises a direction changing member provided at the other side frame and configured to change the direction in which the other end of the band extends and a pre-tensioner which is connected to the other end of the band. The other end of the band is wound around the direction changing member that changes the extension direction, thereby extending from the direction changing member to the pretensioner, and the pretensioner pulls the band at an emergency.

A vehicle seat is known from DE 198 59 197 A1 with a pre-tensioner that is connected to both the seat belt and the other end of an anti-submarining element. A pretensioner pulls the anti-submarining element together with the seat belt in case of an emergency.

Needless to say, for safety at an emergency it is desirable to pull and tighten the seat belt, thereby to prevent the occupant from moving forward despite the inertial force acting on him at an emergency, and ultimately to control the submarine phenomenon.

No vehicle seats simple in configuration and yet able to pull the seat belt at an emergency are known, however.

An object of this invention is to provide a vehicle seat that is simple configuration and can yet pull the seat belt at an emergency.

### SUMMARY OF THE INVENTION

To achieve the object, a vehicle seat according to claim 1 comprises a seat cushion having a seat pad and a pair of side frames supporting the seat pad from the left and right sides; a band extending between the side frames and secured, at one end, to one of the side frames; a direction changing member provided at the other side frame and configured to change the direction in which the other end of the band extends; and a pre-tensioner connected to the other end of the band, wherein the other end of the band is wound around the direction changing member, is changed in extension direction, thereby extending from the direction changing member to the pre-tensioner, and the pre-tensioner pulls the band at an emergency, wherein the pre-tensioner is connected to the seat belt and to the other end of the band, and the pre-tensioner pulls the band together with the seat belt at an emergency, the band extends between the side frames at a lower surface of the seat pad, and the pre-tensioner pulls the seat belt at an emergency, pulling and stretching the band between the side frames, thereby holding an occupant on the vehicle seat, pushing up the seat pad in front of the occupant's buttocks and forming a barrier preventing the occupant from moving forward.

An embodiment of the vehicle seat comprises a seat cushion having a seat pad and first and second side frames supporting the seat pad from the left and right sides; a band extending between the first and second side frames and secured, at one end, to the second side frame; a direction changing member provided at the first side frame for changing the direction in which the other end of the band extends; and a pre-tensioner provided at the first side frame, on a chassis support member, and connected to a seat belt and to the other end of the band, wherein the other end of the band is wound around the direction changing member, is changed in extension direction, thereby extending from the direction changing member along the first side frame to the pre-tensioner, and is connected to the pre-tensioner, and the pre-tensioner pulls the other end of the band together with the seat belt at an emergency.

### BRIEF DESCRIPTION OF THE DRAWINGS

FIG. 1A is a partly sectional, side view of a vehicle seat according to one embodiment (First Embodiment) of this invention, showing the seat cushion on a lower position;
FIG. 1B is a partly sectional, side view of the vehicle seat according to the embodiment, with the seat cushion lifted from the lower position to an upper position;
FIG. 1C is a sectional view of the seat cushion of the vehicle seat, which the band is not pulled and stretched between the side frames;
FIG. 1D is a sectional view of the seat cushion of the vehicle seat, which the band is pulled and stretched between the side frames;
FIG. 2A is a side view of the vehicle seat, showing the seat cushion on the lower position;
FIG. 2B is a side view of the vehicle seat, showing the seat cushion lifted from the lower position to the upper position;
FIG. 3 is a side view of the vehicle seat having a buckle pre-tensioner used as a traction device, corresponding FIG.2A;
FIG. 4A is a sectional front view of the buckle pre-tensioner;
FIG. 4B shows a modification of a wire;
FIG. 5A is a sectional front view of the buckle pre-tensioner used in the vehicle seat according to this invention;
FIG. 5B is a sectional, left-side view of the buckle pre-tensioner used in the vehicle seat according to this invention;
FIG. 5C is a front view of the stay used in the vehicle seat according to this invention;
FIG. 6A is a front view of the buckle pretensioner used in a vehicle seat according to another embodiment (Embodiment 2) of this invention;
FIG. 6B is a partly sectional, plan view of the wire and band, as viewed in the direction of arrow 6B shown in FIG. 6A;
FIG. 6C is a partly sectional, front view of the two wires connected to a piston;
FIG. 7A is a front view of the buckle pretensioner used in a vehicle seat according to still another embodiment (Embodiment 3) of this invention;
FIG. 7B is a partly sectional, perspective view of the buckle pre-tensioner used in a vehicle seat according to still another embodiment (Embodiment 3) of this invention;
FIG. 7C is a perspective view of the sealing pipe used in vehicle seat according to the still another embodiment (Embodiment 3);
FIG. 8 is a front view of the buckle pre-tensioner used in a vehicle seat according to a further embodiment (Embodiment 4) of this invention;
FIG. 9 is a front view of the buckle pre-tensioner used in a vehicle seat according to another embodiment (Embodiment 5) of this invention;
FIG. 10A is a front view of the lap pre-tensioner used in a vehicle seat according to a further embodiment (Embodiment 6) of this invention;
FIG. 10B is a partly sectional, plan view of the wire, connector and band, as viewed in the direction of arrow 10B shown in FIG. 10A; and
FIG. 11A is a front view of the lap pre-tensioner used in a vehicle seat according to a still other embodiment (Embodiment 7) of this invention; and
FIG. 11B is a partly sectional, plan view of the wire, connector and band, as viewed in the direction of arrow 11B shown in FIG. 11A.

### DETAILED DESCRIPTION OF THE INVENTION

### [Embodiment 1]

Embodiments of this invention will be described in detail, with reference to the accompanying drawing.

In the drawing, Fr and Rr indicate the forward and backward directions with respect to the occupant seated in the driver seat, and L and R indicate the leftward and rightward directions with respect to the occupant.

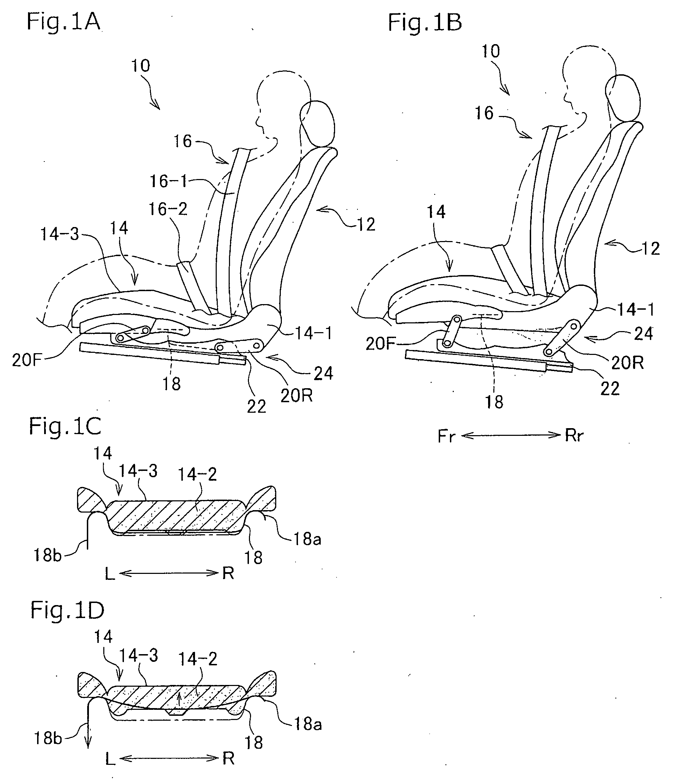

As shown in FIG. 1A and FIG. 1B, the vehicle seat 10 comprises a seat back 12 and a seat cushion 14. A seat belt 16 is secured to the vehicle seat 10. The seat cushion 14 comprises a cushion frame, a seat pad 14-2, and a trim cover 14-3. The cushion frame includes left and right side frames 14-1. The seat pad 14-2 is made of foamed material such as urethane foam and puts on the cushion frame. The trim cover 14-3 covers the seat pad 14-2. The seat back 12 has a configuration similar to that of the seat cushion 14.

The seat belt 16 is, for example, a three-point holding type (also known as three-point seat belt). A retractor that has wound a webbing with a traction force and stores the webbing so wound is provided in, for example, a pillar of the chassis. The webbing extends from the retractor and is fastened, at the distal end, to a lap anchor. The occupant may hold the tongue secured to the webbing and pull the webbing from the retractor, and may then insert the tongue into the buckle provided on the side of the seat cushion 14. When the occupant releases the tongue, the webbing is rewound back into the retractor, by virtue of the traction force of the retractor. As a result, the webbing is no longer slacken, and its upper half (shoulder webbing) 16-1 is wrapped around the occupant, extending from one shoulder to the left or right side of the waist, and its lower-half (lap webbing) 16-2 is wrapped around the occupant's waist. The webbing thus holds the occupant to the vehicle seat.

In the configuration, wherein the buckle pretensioner pulls the buckle, the lap anchor is secured to, for example, the car-floor side support (seat raiser). In the configuration, wherein the anchor pretensioner pulls the buckle, the buckle is secured to, for example, the car-floor side support.

As shown in FIG. 1C, the seat pad 14-2 is held at the left and right sides, by the side frames. The seat pad 14-2 has a cross section shaped like U, having both side parts raised higher than the center part on which an occupant may sit. A band 18 is provided at the center part of the seat cushion 14, extending between the left and right side frames 14-1 and below the seat pad 14-2. The band 18 is, for example, a belt (webbing), which is made, like a seat belt, by waving polyester fibers that excel in tensile strength.

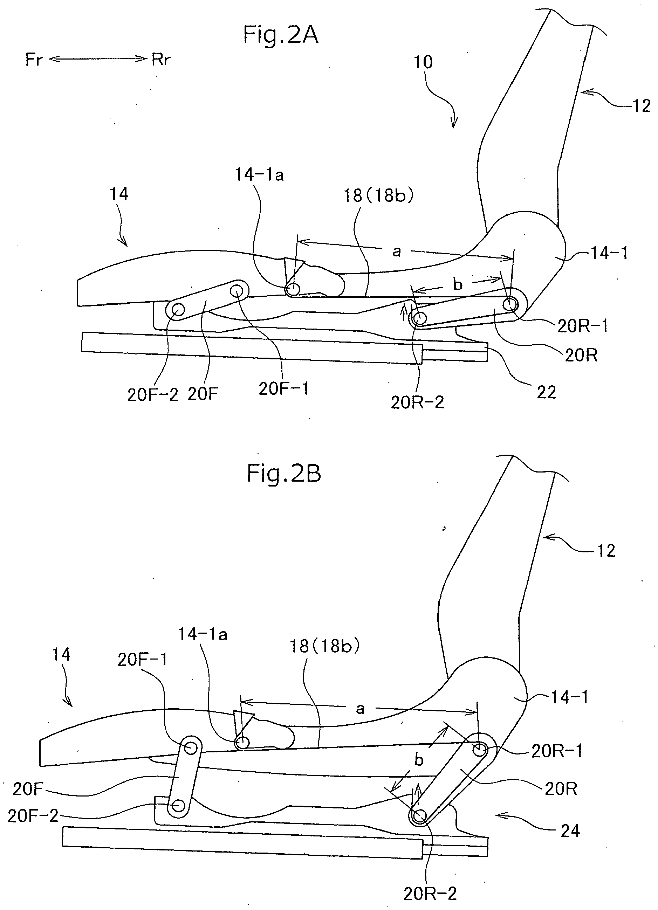

As shown in FIG. 1A, FIG. 1B, FIG. 2A and FIG. 2B, the vehicle seat 10 has a seat lifter (lift mechanism) 24 provided between, for example, the seat cushion 14 and the car-floor side support (seat raiser) 22. The seat lifter (lift mechanism) 24 has a front height link 20F and a rear height link 20R. The front link 20F of the seat lifter 24 is coupled to the side frame 14-1 by an axle 20F-1 and to the chassis support member (seat raiser) 22 by an axle 20F-2, and can swing. The rear link 20R of the seat lifter 24 is coupled to the side frame 14-1 by an axle 20R-1 and to.the chassis support member (seat raiser) 22 by an axle 20R-2, and can swing. Therefore, as the front link 20F and the rear link 20R are swung around the axes 20F-2 and 20R-2, the seat cushion 14 is lifted or lowered.

The basic configuration of the seat lifer (lift mechanism) 24 is known in the art, not characterizing the present invention, and shall not be described in detail.

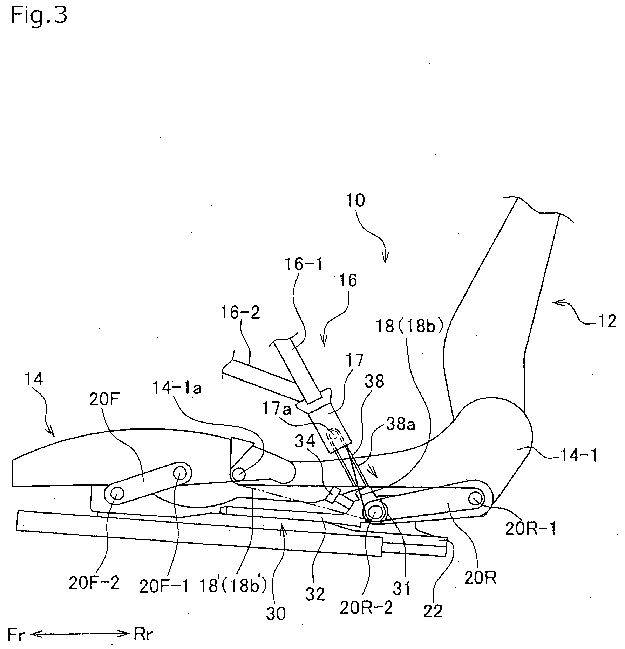

As shown in FIG. 3, the buckle 17 into which the tongue may be inserted is provided at the left side (inside the vehicle) of the seat cushion 14 in the embodiment. A buckle pre-tensioner 30 as a traction device for pulling the seat belt 16 via the buckle 17 is provided on chassis support member (car-floor side support member) 22.

As shown in FIG. 1C and FIG. 1D, the end 18a of the band 18 is secured to the top of the side frame (right side frame) 14-1 at which neither the buckle 17 nor the pre-tensioner 30 are provided. The other end (free end 18b) of the band 18 extends over the top of the side frame (left side frame) at which the pretensioner is provided, and the band 18 then hangs down. The other end 18b of the band 18 is pulled by the pre-tensioner.

It suffices to secure one end 18a of the band 18 to the right side frame 14-1 at any other part thereof, but not the top thereof.

While the vehicle is running in normal state, the band 18 lies at the lower surface of the seat pad 14-2 as shown in FIG. 1C, no matter whether the seat cushion 14 is lowered as shown in FIG. 1A or lifted as shown in FIG. 1B. At an emergency such as collision, the band 18 is pulled at the other end and is stretched between the left and right side frames 14-1 as shown in FIG. 1D, pushing up the seat pad 14-2 in the direction of the arrow. The band 18 so stretched pushes up the seat pad in front of the occupant's buttocks, forming a barrier. The barrier controls the forward motion of the buttocks, i.e., submarine phenomenon.

Some guide members are provided on the left side frame 14-1. The guide members are, for example, pins that guide the band 18 (more precisely, free end 18b) over the top of the side frame to the pre-tensioner (buckle pre-tensioner) 30.

As FIG. 2A shows, the end (free end) 18b of the band 18 hanging down from the top of the left side frame 14-1 is wrapped around the front part of the circumferential surface of a guide member 14-1a provided on the left side frame. The free end 18b then extends, changing its direction from up-down direction to front-back direction. The guide member 14-1a not only guides the free end 18b of the band, but also functions as direction changing member for changing the direction in which the free end 18b extends. The guide member 14-1a is, for example, a pin standing upright on the left side frame 14-1.

After passing the direction changing member (guide member) 14-1a, the free end 18b of the band 18 is wound downwards around the rear circumference of the axle 20R-1 of the left side frame 14-1, which is used as first relay point. The band 18 then extends in front of the left side frame 14-1.

The free end 18b of the band 18 extended around the first relay point (axle 20R-1 of the rear link 20R) is then wound upwards around the lower circumference of the axle 20R-2 of the rear link provided on the chassis support member 22. The free end 18b is then turned back at the second axle 20R-2 used as second relay point, and is thereby extended.

The free end 18b of the band 18 extended around the second relay point (axle 20R-2 of the rear link 20R) is stretched to the pre-tensioner 30 and is pulled at an emergency such as collision.

The direction changing member 14-1a positioned right below the top of the left side frame 14-1, the axle (first relay point) 20R-1 of the rear link, and the axle (second relay point) 20R-2 of the rear link work as guide members. Guided by these guide members, the free end 18b of the band 18 extends to the pretensioner 30.

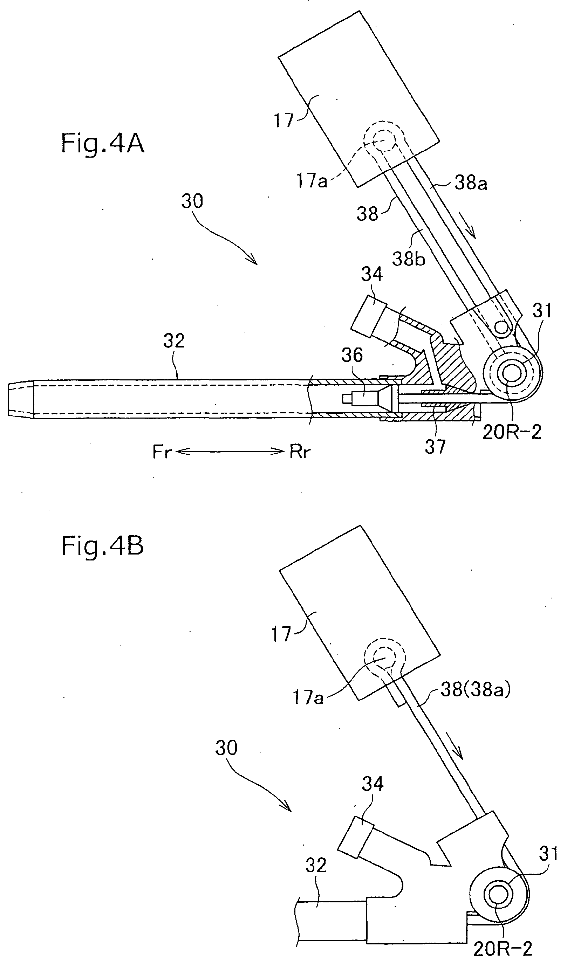

The pre-tensioner is a well-known device. Its basic configuration will be briefly described. As shown in FIG. 3 and FIG. 4A, the pre-tensioner 30 comprises a cylinder 32, an inflator (micro gas generator (MGG)) 34, a piston 36, and a seal 37, and is arranged at the chassis support member 22. The inflator 34 communicates with the cylinder 32 and can generate high-pressure gas at an emergency, supplying the gas to the cylinder 32. The piston 36 is arranged in the cylinder and can slide in the cylinder. The seal 37 is a tube having a conical distal end.

The buckle 17 is connected to the pre-tensioner 30 by a wire 38. The wire 38 is fastened, at one end, to one end of the piston 36. The other end of the wire 38 is wrapped around a pin 17a, thereby turned by 180°, and is then fastened to one end of the pre-tensioner 30. That is, two parts 38a and 38b of the wire 38, which extend from, and back to, the buckle 17, respectively, connect the buckle 17 to the pretensioner 30.

FIG. 4B shows a modification of the pre-tensioner 30. In the modification, the wire 38 is connected, at one end, to an end of the piston 36, and the other end of the wire 38 is wound the pin 17a and fastened thereto. Thus, the buckle 17 is connected to the pretensioner 30 by a wire equivalent to the part 38a extending from the buckle.

At an emergency such as collision, the inflator 34 instantaneously operates, generating high-pressure gas. The high-pressure gas draws the piston 36 into the cylinder 32. As seen from FIG. 4A, the piston 36 slides to the left (direction Fr, toward the distal end of the cylinder). The wire 38 (more precisely, part 38a extending from the buckle 17) is therefore pulled in the direction of the arrow. As a result, the seat belt 16 (shoulder webbing 16-1 and lap webbing 16-2) is pulled, not slacken at all, and holds the occupant in the seat 10, preventing him from moving forward, despite the inertial force acting on him at the emergency.

In this invention, the guide member (pin) 14-1a provided on the left side frame 14-1 and the first and second relay points (axles 20R-1 and 20R-2) guide the free end 18b of the band, which extends to the pretensioner 30. The pre-tensioner 30 therefore pulls the band 18 at the same time the buckle 17 is pulled.

The pre-tensioner 30 can pull the seat belt 16 and the free end 18b of the band 18. This is because the free end 18b of the band 18 is connected to the piston 36 or the wire 38 of the pre-tensioner, as will be explained below.

In the embodiment, the pre-tensioner 30 is fastened to the chassis support member 22 by a fastening axle 31. The fastening axle 31 is coaxial with the axle 20R-2 of the rear link. The band 18 is wrapped upwards around the axle 20R-2 and is connected to the wire 38, immediately below the buckle 17.

The fastening axle 31 may be arranged, not coaxial with the axle 20R-2 of the rear link. Nonetheless, the configuration is simpler if the fastening axle 31 is coaxial with the axle 20R-2.

At an emergency such as collision, the inflator 34 instantaneously operates, generating high-pressure gas. The gas draws the piston 36 in the cylinder 32 and slides in the cylinder 32. Then, the wire 38 (more precisely, part 38a extending from the buckle 17) is pulled in the direction of the arrow as shown in FIG. 3 and FIG. 4. At the same time, the buckle 17 and the free end 18b of the band 18 are pulled, too.

As the buckle 17 is pulled, the seat belt 16, which is coupled to the buckle, is pulled and tightened, preventing the occupant from moving forward in spite of the inertial force acting on the occupant at the emergency. Further, as the free end 18b of the band 18 is pulled at the same time as the buckle 17, the band 18 is stretched between the left and right side frames 14-1, pushing up the seat pad 14-2 (see FIG. 1D). More specifically, the band 18 pushes up the seat pad in front of the occupant's buttocks, forming a barrier. The barrier controls the forward motion of the occupant's buttocks (submarine phenomenon).

At an emergency, the pre-tensioner 30 pulls the buckle 17 and the band 18 at the same time. As the buckle 17 is pulled, the seat belt 16 is pulled and tightened, preventing the occupant from moving forward in spite of the inertial force acting on him at the emergency. As the band 18 is pulled and tightened, the submarine phenomenon is controlled. Thus, the simultaneous pulling of the buckle 17 and band 18, accomplished by the pre-tensioner 30, ensures the occupant's safety at the emergency.

The seat cushion 14 may rise and change in position as shown in FIG. 2A and FIG. 2B. Even in this case, the distance between the direction changing member 14-1a and the first relay point (axle 20R-1 of the rear link) functioning also as guide member remains unchanged. This is because both the direction changing member 14-1a and the first relay point are provided on the left side frame 14-1 of the seat cushion 14.

The first and second relay points 20R-1 and 20R-2 are the axles 20R-1 and 20R-2 of the rear link, respectively. Therefore, the distance between the first and second relay points, i.e., 20R-1 and 20R-2, remains unchanged even if the rear link 20R swings around the second relay point to move the seat cushion 14 up or down.

The distance for which the band 18 extends from the second relay point (i.e., axle 20R-2 of the rear link) until it is connected to the wire 38 right below the buckle 17 is of course constant, not changing at all.

Thus, the distance the band 18 extends between the top of the left side frame 14-1 and the pre-tensioner 30 (i.e., distance the seat cushion extends along the left side frame) does not change as the seat cushion 14 is lifted or lowered, changing in position. The band 18 can therefore be immediately pulled and tightened at an emergency, and that distance need not be adjusted as the seat cushion 14 is lifted or lowered. Hence, the configuration of pulling and tightening the band 18 to control the submarine phenomenon can be applied to the vehicle seat 10 having a seat lifter.

The submarine phenomenon can be controlled by a simple configuration, which comprises the direction changing member 14-1a provided on the left side frame 14-1 and the two axles of the rear link, which function as first and second relay points 20R-1 and 20R-2, respectively, and in which the band 18 extends to the pre-tensioner 30 via the direction changing member (i.e., guide member) and the two axles of the rear link.

The seat lifter 24 raises the seat cushion 14, changing the distance between the seat cushion and the chassis support member 22. Nonetheless, the band 18 remains unchanged in length, and is neither pulled nor stretched between the left and right side frames 14-1. The band 18 therefore stays below the seat pad 14-2 (or at initial position), and does not push up the seat pad even if the seat cushion 14 is lifted in normal state. This makes the occupant feel comfortable.

Even if the seat cushion 14 is lowered, the distance between the seat cushion 14 and the chassis support member 22 will not change at all.

Instead of using the axles 20R-1 and 20R-2 of the rear link as first relay and second relay points, the axles 20F-1 and 20F-2 of the height link (front link) 20F may be used as first relay and second relay points. In this case, too, the distance the band 18 extends between the top of the left side frame 14-1 and the pre-tensioner 30 remains unchanged.

The pre-tensioner 30 pulls not only the buckle 17, but also the band 18 (more precisely, the free end 18b of the band 18) at the same time. Therefore, no traction device needs be provided. This helps to simplify the configuration.

One end 18a of the band 18 is fixed in position, and the other end 18b of the band 18 is set free end and is pulled. The configuration is therefore simpler than in the case where the band 18 is pulled at both ends.

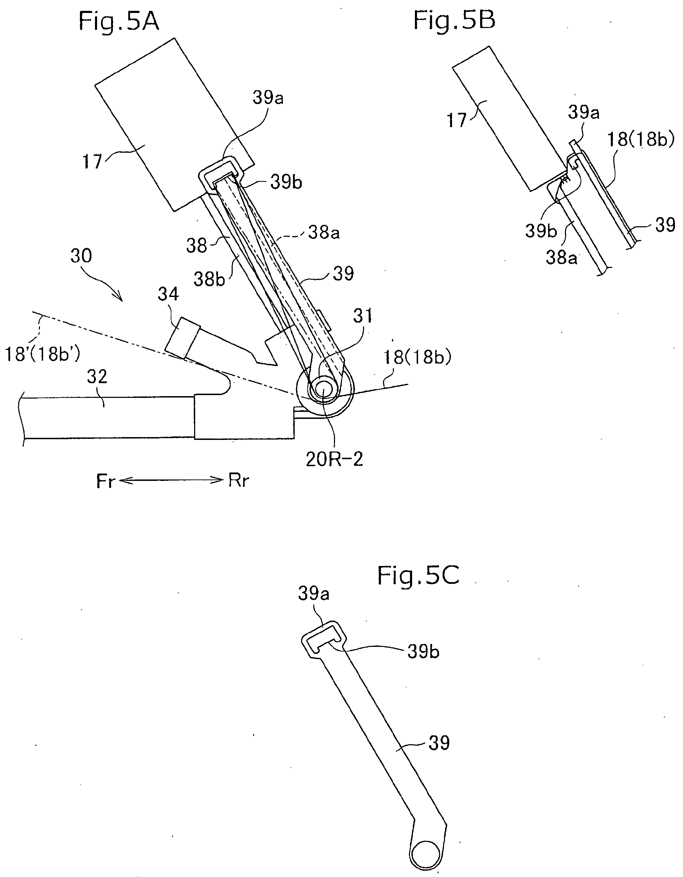

As shown in FIG. 3, the band 18 is stretched up from the second relay point, i.e., the axle (guide member) 20 of the rear link, and is connected to the wire 38, right below the buckle 17. This configuration is shown in detail in FIGS. 5A to FIG. 5C.

In FIG. 5B, however, only the part 38a of the wire 38 extending from the buckle 17 is shown, and the part 38b of the wire 38 that lies at the back of the part 38a and extends to the buckle 17 is not shown.

As shown in FIG. 5A and FIG. 5B, the pre-tensioner (buckle pre-tensioner) 30 has a stay 39 for guiding the free end 18b of the band from the second relay point (axle 20R-2 of the rear link) to the buckle 17.

The stay 39 is shaped like an elongate plate and is secured at one end to the fastening axle 31 that is coaxial with the axle of the rear link (second relay point 20R-2). The other end of the stay 39 extends to a point near the buckle, and is composed of a U-shaped frame 39a and a guide strip 39b. The center of the guide strip 39b is bent back.

The free end 18b of the band 18 extending from the axle (guide member or second relay point) 20R-2 of the rear link is inserted into the U-shaped frame 39a at the other (upper) end of the stay, turned back and connected to the wire 38 (more precisely, the part 38a of the wire). The free end 18b of the band 18 is wound around the wire. The resultant turns of the band 18 are sewn together, whereby the free end 18b is connected to the wire 38.

The frame 39a, or the other end of the stay 39, is shaped like U, composed of three pieces, i.e., upper, left and right pieces. The free end 18b of the band 18 therefore never slips from the frame 39a, and is inhibited by the left and right pieces from moving sideways to the left or the right. Hence, the stay 39 smoothly guides the free end 18b of the band 18. The free end 18b of the band 18 is turned back at the guide strip 39b, moderately curved, not bent sharply. Therefore, the band 18 is not damages at all. The stay 39 is provided with the free end 18b extending to the point where it is turned back by the guide strip 39b.

In the embodiment, the free end 18b of the band is connected to the wire 38 (more precisely, part 38a extending from the buckle 17) right below the buckle 17. The position where the free end 18b is connected to the wire 38 is not limited to one right below the buckle 17, nevertheless.

Thus, the pre-tensioner 30 pulls not only the buckle 17, but also the band 18 (more specifically, the free end 18b of the band) at the same time. That is, the pre-tensioner 30 functions as traction device, too. No traction device needs be used to pull the band 18. This helps to simplify the configuration.

The band 18 is secured at one end 18a, and only the other end 18b, or free end, is pulled. The configuration is therefore simpler than in the case the band 18 is pulled at both ends.

In the embodiment, the free end 18b of the band is connected to the part 38a of the wire, which extends from the buckle 17. It suffices, however, that the pre-tensioner 30 pulls the band 18 at the same time it pulls the buckle 17. This is why the free end 18b of the band 18 may be directly or indirectly connected not to the part 38a of the wire, but to the piston that slides in the cylinder. In this case, too, the band 18 is pulled at the same time the buckle 17 is pulled.

### [Embodiment 2]

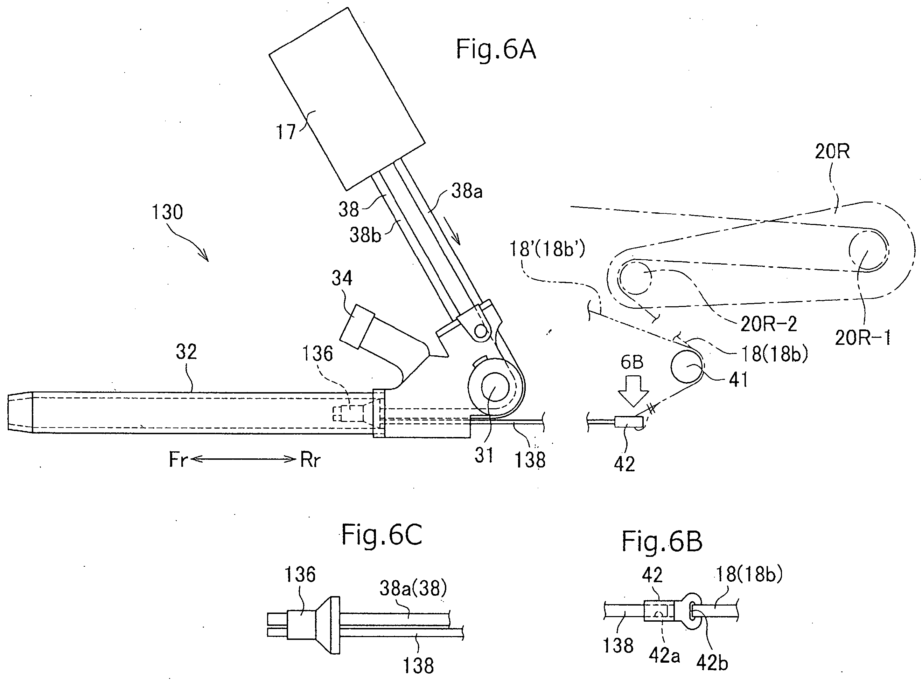

Embodiment 2 will be described with reference to FIG. 6A to 6C. The components identical to those of the above-described embodiment (Embodiment 1) are designated by the same reference numbers, and will not be described. The components different from those of Embodiment 1 will be described in the main.

In Embodiment 1, the free end 18b of the band is connected to the wire 38 that couples the buckle 17 to the pre-tensioner 30. In Embodiment 2, the free end 18b is connected to a wire different from the wire extending between the buckle 17 and the pre-tensioner 30.

In Embodiment 2, a piston 136 of a pre-tensioner (buckle pre-tensioner) 130 is connected, at one end, to a wire 138, as well as to the part 38a of the wire 38 extending to the buckle 17. To the other end of the wire 138, the free end 18b of the band 18 is connected by a connector 42 having an elongate hole.

The connector 42 has an engagement hole 42a in one end, in which the wire 138 is held, and an elongate hole 42b at the other end. The free end 18b of the band 18 passes through the elongate hole 42b, and is turned back at the elongate hole. The free end 18b of the band 18, turned back from the elongate hole 42b, is folded double, and the resultant overlapping two parts of the end 18b are sewn together. The free end 18b of the band 18 is thereby connected to the connector 42. The engagement hole 42a extends in the axial direction of the connector, and the elongate hole 42b extends orthogonal to the axis of the connector.

Below the second relay point (axle 20R-2 of the rear link), the free end 18b of the band extends. The free end 18b of the band 18 therefore is wrapped around the second relay point (axle 20R-2 of the rear link), extending downward, and is guided by a guide member 41 that is, for example, a pin. The free end 18b of the band 18 then extends to the connector 42 and is connected to the wire 138. The guide member 41 is provided on the chassis support member 22. Guided by the guided member 41, the free end 18b of the band can be connected to the wire 138, from an appropriate direction. The guide member 41 can serve as third relay point, and is provided on the chassis support member 22, as the axle 20R-2 of the rear link that serves as second relay point. Thus, the distance the band 18 extends remains unchanged even if the band 18 extends to the pre-tensioner 130 via the guide member 41.

Also in this embodiment, the piston 136 is drawn into the cylinder 32 when the inflator 34 is actuated at an emergency. The wire 138 and the part 38a of the wire 38, both connected to the piston 136, are therefore pulled in the direction of the arrow shown in FIG. 6A. At the same time, the buckle 17 and the free end 18b of the band are pulled. This prevents the occupant from moving forward in spite of the inertial force generated at the emergency, thereby controlling the submarine phenomenon, as in Embodiment 1.

### [Embodiment 3]

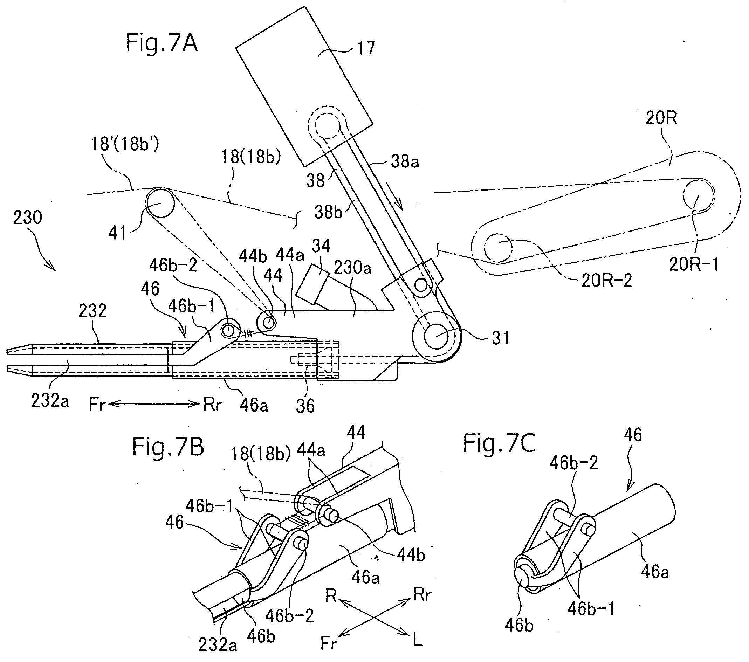

FIG. 7A, FIG. 7B and FIG. 7C show Embodiment 3. In Embodiment 3, the piston abuts on a slider connected to one end 18b of the band 18. As the piston moves, the slider is moved, pulling the free end 18b of the band 18. The components identical to those of Embodiment 1 are designated by the same reference numbers, and the components different from those of Embodiment 1 will be described in the main.

In Embodiment 3, the pre-tensioner (buckle pretensioner) 230 has a bracket 44, which is formed integral with the main unit 230a of the pre-tensioner. The cylinder 232 has two slits 232a, which extend along the axis of the cylinder, from the middle part of the cylinder to the distal end thereof. A slider 46 covers the cylinder 232, and can slide on the cylinder.

As shown in FIG. 7A and FIG. 7B, the bracket 44 is forked, having two side walls 44a protruding from the upper part of the main unit 230a. The two side walls 44a clamp the cylinder 232 from the left and the right, respectively. A shaft 44b extends between the free ends of the side walls 44a and is connected to the free ends of the side walls. The slits 232a are made in the left and right walls of the cylinder 232 and are spaced apart by 180° in the circumferential direction of the cylinder 232. As seen no only from FIG. 7A and FIG. 7B, but also from FIG. 7C, the slider 46 has a seal 46a and a cover 46b. The seal 46a is shaped like a hollow cylinder and can slide on the outer surface of the cylinder 232. The cover 46b is provided in the cylinder 232 and can slide on the inner surface of the cylinder, and closing the outer end of the seal 46a. The cover 46b has two arms 46b-1, which pinch the seal 46a at the left and right sides thereof. The arms 46b-1 extend slantwise and backward, passing through the slits 232a made at the cylinder 232, and are positioned parallel to the side walls 44a of the bracket 44. A shaft 46b-2 extends between the distal ends of two arms 46b-1, is connected to the distal ends of two arms 46b-1, and is opposed to the shaft 44b that extends between the side walls 44a.

In Embodiment 3, the free end 18b of the band extends forward, from below the second relay point (axle 20R-2 of the rear link), is guided by the guide member 41, extending downward. The free end 18b of the band 18 is then wrapped, from above, around the shaft 44b of the bracket, and then around the shaft 46b-2 of the slider, and is folded double, and the resultant two overlapping parts of the end 18b are sewn together. The free end 18b of the band 18 is thereby connected to the slider 46.

Also in this embodiment, the piston 36 is drawn into the cylinder 232 when the inflator 34 is actuated at an emergency. The wire 38 (more precisely, the part 38a of the wire), connected to the piston 36, is therefore pulled in the direction of the arrow shown in FIG. 7A and pulls the buckle 17. As the buckle 17 is pulled, the seat belt 16 is pulled and tightened, preventing the occupant from moving forward in spite of the inertial force generated at the emergency.

The cover 46b of the slider 46, which can slide in the cylinder 232 and closes the outer end of the seal 46a, is positioned in the direction the piston 36 moves. The piston 36 is therefore drawn into the cylinder 232, while pulling the wire 38 (more precisely, part 38a of the wire, which extends forward). As the piston 36 moves in the cylinder 232 toward the distal end of the cylinder (direction Fr), it abuts on the cover 46b of the slider, pushing the cover.

When the cover 46b of the slider is pushed by the piston 36, it is pushed, together with the seal 46a, onto the piston. This is because the two arms 46b-1 of the cover 46b clamp the seal 46a at both ends. As a result, the piston 36 moves, together with the slider 46, toward the distal end of the cylinder 232.

As the slider 46 is pushed by the piston 36, moving together with the piston, the free end 18b of the band is pulled because it is connected, by the shaft 44b of the bracket, to the shaft 46b-2 that extends between the distal ends of two arms 46b-1 of the slider. The end 18b is therefore tightened between the side frames 14-1 and pushes up the seat pad 14-2, forming a barrier in front of the occupant's buttocks. The submarine phenomenon is thereby controlled.

As described above, the free end 18b of the band is never pulled until the piston 36 abuts on the cover 46b to move the slider 46. Therefore, the band 18 is not pulled at the same time the buckle 17 is pulled. Rather, the band is pulled with some time lag, not pulled until the piston 36 abuts on the cover 46b. Although the band 18 is pulled with a time lag with respect to the pulling of the buckle 17, the piston 36 abuts on the cover 46b, pushing the cover. The slider 46 therefore moves together with the piston 35, pulling the band 18 without fail. The time lag is very so small that the pre-tensioner (buckle pre-tensioner) 230 first pulls the buckle 17 and then pulls the band 18, tightening the band. As a result, the occupant is prevented from moving forward in spite of the inertial force generated at the emergency. The submarine phenomenon is therefore controlled in this embodiment, too.

The slider 46 moves together with the piston 36, as its two arms 46b-1 are guided along the slits 232a made in the cylinder. Nonetheless, the outer end of the seal 46b is sealed with the cover 46b, and the hollow cylindrical seal 46a of the slider covers the outer surface of the cylinder and can slides thereon. Hence, even if the piston 36 moves to a position where it overlaps the slits 232a of the cylinder, the seal 46a keeps the cylinder airtight, preventing the high-pressure gas flown into the cylinder 232 from leading through the slits. The slits 232a of the cylinder therefore never hinder the motion of the slider 46. The piston 36 and the slider 46 can therefore move together.

Since the two arms 46b-1 of the cover clamp the seal 46a, the cover 46 and the seal move together. The cover 46 and the seal 46a only need be formed integral, and it is not absolutely necessary to clamp the seal with the arms. Instead, the arms 46b-1 may be welded to the seal 46a or fastened thereto with screws. Alternatively, each arm 46b-1 and the seal 46a may be coupled together, by inserting the engagement projection made on one, into the engagement hole made in the other.

### [Embodiment 4]

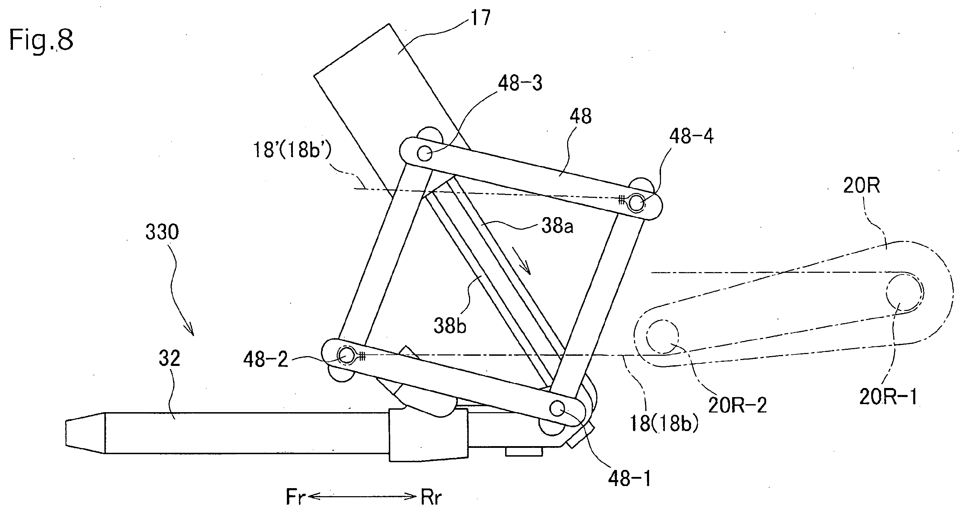

FIG. 8 shows Embodiment 4, in which one end of a band is connected to the axle of a pantograph-shaped four-node link. As the buckle is pulled, the four-joint link is deformed, pulling the free end 18b of the band 18. The components identical to those of Embodiment 1 are designated by the same reference numbers, and the components different from those of Embodiment 1 will be described in the main.

Of the four axles constituting the four-node link 48, the axle 48-1 is coupled to the pre-tensioner (buckle pre-tensioner) 330, and the axle 48-3 opposed to the axle 48-1 is coupled the buckle 17. The other axles 48-2 and 48-4 are set in floating state. Thus, the four-node link 48 is shaped like a pantograph. The free end 18b of the band 18 is connected to one of the axles 48-2 to 48-4, not to the axle (fixed axle) 48-1.

In this embodiment, the free end 18b of the band 18 is wrapped, from below, around the second relay point (axle 20R-2 of the rear link) and extends forward. The free end 18b of the band 18 is then wrapped around the axle 48-2, i.e., one of the floating axles, and turned back or folded double. The resultant two overlapping parts of the free end 18b are sewn together. The free end 18b of the band 18 is thereby connected to the axle 48-2.

The free end 18b of the band 18 is connected to one of the axles 48-2 to 48-4, not to the axle (fixed axle) 48-1 positioned on the pre-tensioner. However, the free end 18b of the band 18 should better be connected to the axle 48-2 or 48-4, which can more change in position than the axle 48-3 provided on the buckle.

If the free end 18b of the band 18 is connected to the axle 48-2 or 48-4, it can be pulled and tightened faster and more strongly, because the axles 48-2 and 48-4 more greatly change in position than the axle 48-3.

Also in this embodiment, the piston is drawn into the cylinder 32 when the inflator 34 is actuated at an emergency. The wire 138 (more precisely, the part 38a of the wire), which is connected to the piston, is therefore pulled in the direction of the arrow shown in FIG. 8, and pulls the buckle 17. As the buckle 17 is so pulled, the axle 48-3 of the four-node link 48 positioned between the pre-tensioner 330 and the buckle 17 lowers, approaching the fixed axle 48-1 secured to the pre-tensioner. The axles (floating axles) 48-2 and 48-4, lying between the axles 48-1 and 48-3, move sideways. As a result, the four-node link 48 is folded, pulling the band 18 connected to the axle 48-2.

The wire 38 (more precisely, part 38a of the wire) is pulled, pulling the buckle 17, when the inflator 34 is actuated at an emergency. As the buckle 17 is so pulled, the free end 18b of the band is pulled. That is, the buckle 17 and the free end 18b of the band are pulled at the same time, also in Embodiment 4. As the buckle 17 is so pulled, the seat belt 16 is pulled and tightened, preventing the occupant from moving forward in spite of the inertial force generated at the emergency. As the band 18 is pulled and tightened, the submarine phenomenon is controlled.

### [Embodiment 5]

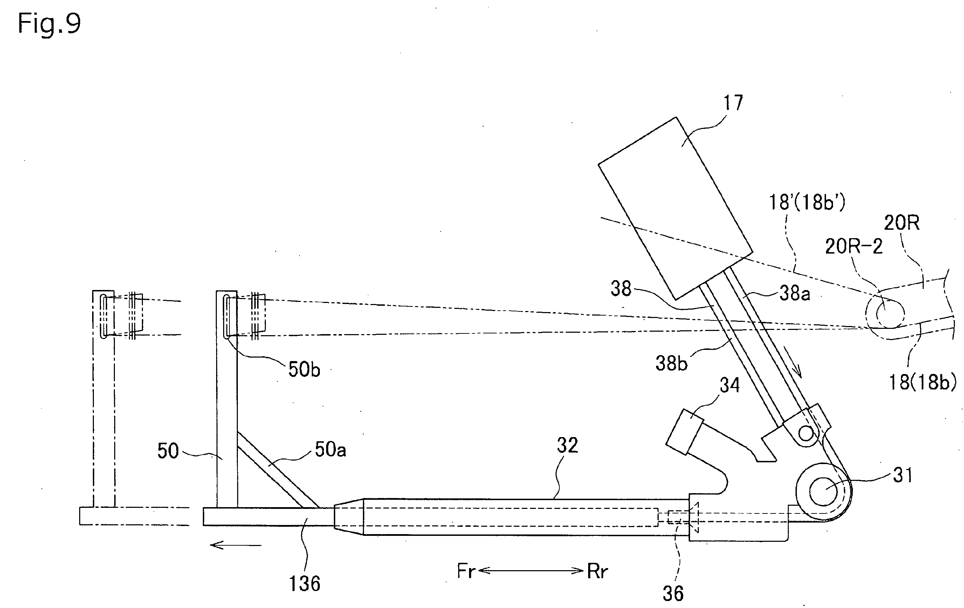

FIG. 9 shows Embodiment 5, in which a long piston is provided in the cylinder to operate in unison with the piston. To the long piston, a band is connected. The band is therefore pulled as the long piston moves in the piston. The components identical to those of Embodiment 1 are designated by the same reference numbers, and the components different from those of Embodiment 1 will be described in the main.

In Embodiment 5, a long piston 136 is provided in the cylinder 32 and opposed to the piston 36. The long piston 136 abuts, at one end (right end in FIG. 9), on the wire 38 connected to the piston 36 and extending behind the piston 36 (extending leftward, in FIG. 9). The other end (left end in FIG. 9) of the long piston 136 extends from the cylinder 32. At the other end (left end) of the long piston 136, a support pillar 50 stands upright and is reinforced by a stay 50a. The support pillar 50 has a slit (vertical slit) 50b.

In this embodiment, the free end 18b of the band extends from below the second relay point (and wound around the lower circumferential surface of the axel 20R-2 of the rear link), as in Embodiment 1. The free end 18b of the band 18 then passes the vertical slit 50b of the support pillar and is turned back. The resultant two overlapping parts of the band are sewn together, whereby the free end 18b of the band is connected to the long piston 136.

At an emergency such as collision, the inflator 34 instantaneously operates, generating high-pressure gas. The high-pressure gas draws the piston 36 into the cylinder 32. The piston 36 moves in the cylinder 32, to the left in FIG. 9 (direction Fr), pulling the wire 38 (more precisely, part 38a extending from the buckle 17). As a result, the buckle 17 is pulled.

The piston 36 is drawn into the cylinder 32. As the piston 36 moves in the cylinder 32, the wire 38 (extending behind the piston), more precisely, the part 38a extending from the buckle 17, abuts on the long piston 136, pushing the long piston. So pushed by the piston 36, the long piston 136 operates in unison with the piston, pulling the band 18.

Since the long piston 136 operates in unison with the piston 36 at an emergency, the buckle 17 and the free end 18b of the band are pulled at the same time. The seat belt 16 is therefore pulled and tightened. So tightened, the seat belt 16 prevents the occupant from moving forward in spite of the inertial force generated at the emergency. Further, the free end 18b of the band is pulled and stretched between the left and right side frames 14-1, pushing up the seat pad 14-2 in front of the occupant's buttocks. The submarine phenomenon is thereby controlled.

The long piston 136, to which the band 18 is connected, needs only be positioned to operate in unison with the piston 36. The long piston 136 may be coupled to the piston 36. The long piston 136 may be connected to the wire 38 (more precisely, part 38a extending from the buckle 17) which is connected to the piston 36 and which extends behind the piston 36, or may be coupled directly to the piston 36. If the long piston 136 is directly connected to the wire 38 or the piston 36, it can operate in unison with the piston 36 at an emergency, both reliably and instantaneously.

### [Embodiment 6]

In Embodiments 1 to 5, the free end 18b of the band 18 is connected to the buckle pre-tensioner, and the buckle pre-tensioner pulls the buckle and the band (more specifically, the free end of the band). In place of the buckle pre-tensioner, but a lap pretensioner may be connected to the band and may pull the buckle and the band.

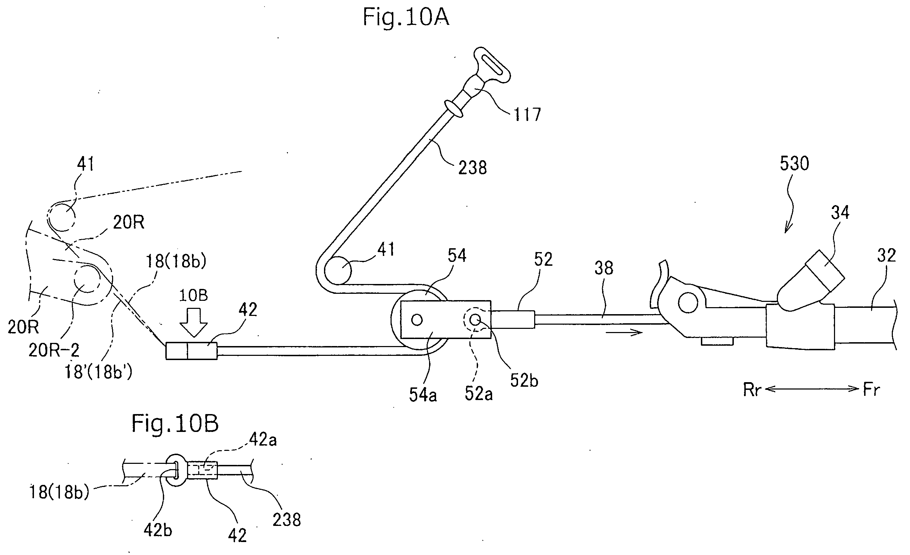

FIG. 10A and FIG. 10B show Embodiment 6. In Embodiment 6, a lap pre-tensioner pulls a lap anchor and a band, and a pulley is used to pull the lap anchor and the band at the same time.

The lap pre-tensioner 530 differs from the buckle pre-tensioner in terms of outer shape, but is similar to the buckle pre-tensioner in basic configuration. At an emergency such as collision, the inflator 34 instantaneously operates, generating high-pressure gas. The gas draws the piston into the cylinder 32. So drawn, the piston pulls the wire connected to it.

As seen from FIGS. 1A, 1C and 1D, too, the lap pre-tensioner 530 is secured to the right side frame, not to the left side frame to which the buckle pretensioner is secured. Hence, in the configuration wherein the lap pre-tensioner 530 pulls the band, the end of the band, which is fixed, and the other end (free end) of the band, which extends to the lap pretensioner and pulled thereby, are opposite, in left-right position, to the case where the buckle pretensioner pulls the band.

That is, the band 18 is secured, at left end, to the top of the left side frame, and its right end is free. The free end extends over the top of the right side frame, is turned back by a direction changing member (provided on the right side frame), and extends along the right side frame.

In Embodiment 6, the wire 38 (first wire), which is connected to the piston and which may be drawn into the cylinder 32, together with the piston, is connected to a pulley 54 by a connector 52 having a head. Another wire (second wire) 238 is guided to the guide member 41 provided on the chassis support member and wrapped around the pulley 54. One end of the second wire 238 is connected to the lap anchor 117 to which an end of the lap webbing is secured. A connector 42 having an elongate hole is secured to the other end of the second wire 238. The free end 18b of the band 18 passes through the elongate hole 42b of the connector, is turned back. The resultant two parts of the free end 18b of the band 18 are sewn together, whereby the band is connected to by the connector 42 to the wire 238. The head 52a of the connector is pivotally supported by a pin 52b to the support wall 54a of the pulley.

At an emergency such as collision, the inflator 34 operates at once, generating high-pressure gas. The gas draws the piston into the cylinder 32. As the piston is so drawn, the wire 38 connected to the piston is pulled in the direction of the arrow shown in FIG. 10A (i.e., direction Fr). The other wire 238 wrapped around the pulley is pulled, too. As the wire 238 is pulled, the lap anchor 117 secured to one end of the wire is pulled, too, tightening the seat belt 16. The seat belt 16 therefore prevents the occupant from moving forward, despite the inertial force generated at the emergency. In addition, the free end 18b of the band 18 is pulled via the connector 42, and is stretched between the left and right side frames 14-1, pushing up the seat pad in front of the occupant's buttocks. The submarine phenomenon is thereby controlled.

At an emergency, the wire (first wire) 38 connected to the piston is pulled, moving the pulley. Then, the seat belt 16 and the free end 18b of the band, both connected to the other wire (second wire) 238, are pulled at the same time. This prevents the occupant from moving forward, despite the inertial force generated at the emergency. The submarine phenomenon is thereby controlled.

Particularly, the seat belt 16 and the free end 18b of the band are connected, respectively to the ends of the wire 238 wrapped around the pulley. Therefore, even if the seat belt 16 or the free end 18b of the band stops, the other of these components keeps moving. Hence, the occupant's safety at the emergency would not be impaired.

### [Embodiment 7]

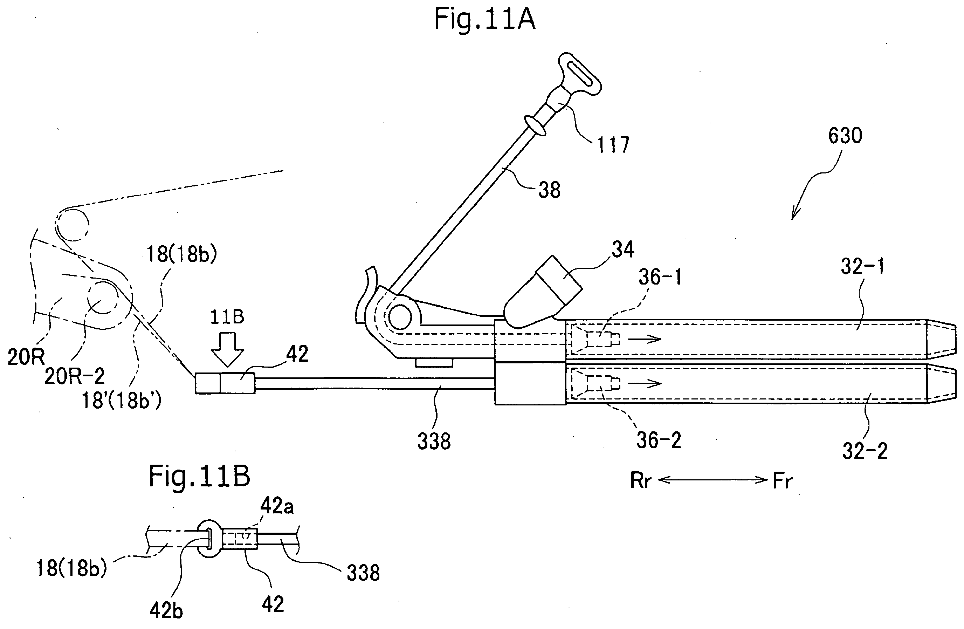

FIG. 11A and FIG. 11B show Embodiment 7, in which the lap pre-tensioner pulls the lap anchor and a free end of the band, as in Embodiment 6. The components identical to those of Embodiment 6 are designated by the same reference numbers, and the components different from those of Embodiment 6 will be described in the main.

In Embodiment 7, the lap pre-tensioner 630 has two cylinders 32-1 and 32-2. The cylinder (first cylinder) 31-1 incorporates a piston (first piston) 36-1 connected to the lap anchor 117 by a wire (first wire) 38. The cylinder (second cylinder) 32-2 incorporates a piston (second piston) 36-2 coupled to the free end 18b of the band by the other wire (second wire) 338. The two cylinders 32-1 and 32-2 are arranged in parallel to each other. The high-pressure gas generated in the inflator 34 flows via the first cylinder 32-1 into the second cylinder 32-2. The first cylinder 32-1 and the second cylinder 32-2 communicate with each other, and the first piston 36-1 and the second piston 36-2 can therefore be simultaneously drawn into the cylinders 32-1 and 32-2, respectively.

A connector 42 having an elongate hole is secured, as in Embodiment 6, to that end of the wired (second wire), which extends from the piston 36-2. The free end 18b of the band 18 passes through the elongate hole 42b of the connector, is turned back. The resultant two overlapping parts of the band 18 are sewn together, whereby the band is connected to by the connector 42 to the wire 238.

At an emergency such as collision, the inflator 34 operates, generating high-pressure gas. The high-pressure gas flows into not only the first cylinder 32-1, but also the second cylinder 32-2. The first and second pistons 36-1 and 36-2 are therefore drawn into the first and second cylinders 32-1 and 32-2, respectively, both moving to the right in FIG. 11A (direction Fr). As the first and second pistons 36-1 and 36-2 move in the cylinders 32-1 and 32-2, respectively, the first and second wires 38 and 338 connected to the first and second pistons are pulled at the same time. As the first wire 38 is pulled, the lap anchor 117 connected to the first wire is pulled. The seat belt 16 is thereby tightened, holding the occupant to the seat 10 and preventing him from moving forward in spite of the inertial force generated at the emergency. As the second wire 338 is pulled, the free end 18b of the band, which is connected to the second wire, is pulled. The band is therefore stretched between the left and right side frames 14-1, pushing up the seat pad in front of the occupant's buttocks. The submarine phenomenon is thereby controlled.

As the first and second wires 38 and 338 connected to the first and second pistons 36-1 and 36-2, respectively, are thus pulled at the emergency, the lap anchor 117 and the free end 18b of the band, both connected to the first and second wires, can be pulled at the same time. The occupant can thereby be prevented from moving forward, despite the inertial force generated at the emergency. The submarine can therefore be controlled.

Embodiment 6 using a pulley and Embodiment 7 using two cylinders arranged in parallel can be changed to a configuration in which the buckle pre-tensioner pulls the buckle, merely by connecting the buckle 17, not the lap anchor 117, to the wire 238 or wire 38.

In Embodiments 1 to 7, the vehicle seat 10 comprises a front link and rear links 20F and 20R. The vehicle seat 10 further comprises a seat lifter 24 provided between the seat cushion 14 and the chassis support member 22. The seat lifter 24 can move the seat cushion 14 up and down. Even if the seat cushion 14 is lifted or lowered, the distance the band 18 extends between the top of the left side frame 14-1 and the pre-tensioner does not change, because the free end 18b of the band 18 extends to the pre-tensioner via the first and second relay points, i.e., axles 20R-1 and 20R-2 of the rear link.

In this invention, the band is fixed at one end and pulled at the other end by the pre-tensioner and is therefore pulled at the same time together with the seat belt. Nonetheless, the invention can be used also in a vehicle seat that has no seat lifter to lift and lower the seat cushion. Hereinafter, it will be described how that end of the band (i.e., free end) is connected to the pre-tensioner, if the seat cushion 14 is neither lifted nor lowered. The band is designated by 18' and its end pulled (free end) by 18b', both indicated by two-dot, dashed line.

If the seat cushion 14 is never lifted or lowered in Embodiment 1, the band 18' (more precisely, the free end 18b' of the band 18') extends from the direction changing member 14-1a directly to the fastening axle 31 of the pre-tensioner. Further, the band 18' (more precisely, free end 18b' of the band 18') extends, via the fastening axle 31, to the U-shaped frame 39a, is turned back at the guide strip 39b, and is connected to the wire 38 (more precisely, part 38a extending from the buckle 17) right below the buckle 17.

In Embodiment 2, the band 18' (more precisely, free end 18b' of the band 18') extends from the direction changing member 14-1a directly to the guide member 41, is relayed and guided by the guide member, further extends to the connector 42, and is connected to the wire 138 (see FIG. 6A).

In Embodiment 3, the band 18' (more precisely, free end 18b' of the band 18') extends from the direction changing member 14-1a, directly to the guide member 41, and is then wound, from above, around the shaft 44b of the bracket. Further, the band 18' is wound, from above, around the shaft 44b of the bracket, is then wrapped around the shaft 46b-2 of the slider, and is thereby turned back. The resultant overlapping parts of band 18b' are sewn together, whereby the free end 18b' is connected to the slider 46 (See FIG. 7A).

In Embodiment 4, the band 18' (more precisely, free end 18b') extends from the direction changing member 14-1a, is wound around the axle 48-4 of the four-node link 48, and is turned back. The resultant two overlapping parts of the band 18' are sewn together, whereby the free end 18b' is connected to the axle 48-4. Needless to say, the free end 18b' may be connected to either the axle 48-2 or the axle 48-3, not to the axle 48-4 (See FIG. 8).

In Embodiment 5, the band 18' (more precisely, free end 18b') extends from the direction changing member 14-1a, directly to the axle 20R-2 of the rear link, and then extends forward. The band 18' passes through the slit 50b of the support pillar 50 and is turned back. The resultant two overlapping parts of the band are sewn together, whereby the free end 18b' of the band 18' is connected to the long piston 136 (See FIG. 9).

In Embodiment 6, the guide member 41 is provided on the right side plate 14-1, and the band 18' (more precisely, free end 18b') extends from the direction changing member 14-1a to the guide member. The band 18' passes through the elongate hole 42b of the connector 42, is turned back at the connector. The resultant two overlapping parts of the band 18' are sewn together, whereby the band is connected to the connector 42 (See FIG. 10A).

In Embodiment 7, the guide member 41 is provided on the right side plate 14-1 as in Embodiment 6. The band 18' (more precisely, free end 18b') extends from the direction changing member 14-1a to the guide member, passes through the elongate hole 42b of the connector, is turned back at the connector. The resultant two overlapping parts of the band 18' are sewn together, whereby the band is connected to the connector 42 (See FIG. 11A).

The embodiments described above have been presented by way of example only, and are not intended to limit the scope of the invention. Further, anything modified or changed within the technical scope of this invention are, needless to say, included in this invention.

In the embodiments described above, one end of the band (or the other end, i.e., free end) is turned back, and the resultant two overlapping parts are sewn together, whereby the band is connected an associated member. Instead, the two overlapping parts may be fused together. Alternatively, a hook may be secured to the end of the band, hold an associated member and then be deformed, disabling the member from releasing from it. Thus, the end of the band may be connected to the associated member by various methods.

In any vehicle seat having a buckle pre-tensioner, the left and right side frames are equivalent to the first and second side frames described in the claims of this application, respectively. In any vehicle seat having a lap pre-tensioner, the left and right side frames are equivalent, respectively to the first and second side frames described in the claims, or respectively to the second and first side frames.

In any embodiment described above, the band extends below the seat pad of the seat cushion and is configured to push up the seat pad. Instead, the band may extend above the seat pad and may be stretched, moving up, at an emergency.

This invention is not limited to a vehicle seat for use in, for example, buses and cars. The invention can be applied also to seats for use in trains and airplanes, each seat having a pre-tensioner that pulls the seat belt at an emergency, preventing the occupant from moving forward, despite the inertial force generated at the emergency, and pulls and tightening the free end of the band, controlling the submarine phenomenon.

## Claims

1. A vehicle seat (10) comprising
a seat cushion (14) having a seat pad (14-2) and a pair of side frames (14-1) supporting the seat pad (14-2) from the left and right sides;
a band (18) extending between the side frames (14-1) and secured, at one end, to one of the side frames (14-1);
a direction changing member (14-1a) provided at the other side frame (14-1) and configured to change the direction in which the other end (18b) of the band (18) extends; and
a pre-tensioner (30) connected to the other end (18b) of the band (18),
wherein the other end (18b) of the band (18) is wound around the direction changing member (14-1a), is changed in extension direction, thereby extending from the direction changing member (14-1a) to the pre-tensioner (30), and the pre-tensioner (30) pulls the band (18) at an emergency, **characterized in that**
the pre-tensioner (30) is connected to the seat belt (16) and to the other end (18b) of the band (18), and the pre-tensioner (30) pulls the band (18) together with the seat belt (16) at an emergency,
the band (18) extends between the side frames (14-1), at a lower surface of the seat pad (14-2), and
the pre-tensioner (30) pulls the seat belt (16) at an emergency, pulling and stretching the band (18) between the side frames (14-1), thereby holding an occupant on the vehicle seat (10), pushing up the seat pad (14-2) in front of the occupant's buttocks and forming a barrier preventing the occupant from moving forward.

2. The vehicle seat (10) according to claim 1, **characterized in that** the pre-tensioner (30) is connected by one end of a wire to a buckle (17) or a lap anchor (117) of the seat belt (16) and actuates an inflator (34) at an emergency, causing the inflator (34) to generate high-pressure gas, the high-pressure gas is supplied to a cylinder (32), moving a piston (36) connected to other end of the wire (38) in the cylinder (32), and the wire is pulled, whereby the buckle (17) or the lap anchor (117) is pulled, pulling the seat belt (16); and
the other end (18b) of the band (18) is connected to the wire and, is pulled at the same time together with when the wire is pulled.

3. The vehicle seat (10) according to claim 1, **characterized in that** the pre-tensioner (30) is connected by one end of a first wire (38) to a buckle (17) or a lap anchor (117) of the seat belt (16) and actuates an inflator (34) at an emergency, causing the inflator (34) to generate high-pressure gas, the high-pressure gas is supplied to a cylinder (32), moving a piston (36) connected to other end of the first wire (38) in the cylinder (32), and first wire (38) connected to the piston (36) is pulled, whereby the buckle (17) or the lap anchor (117) is pulled, pulling the seat belt (16);
a second wire (238) extends parallel to the first wire (38), is connected to other end (18b) of the band (18), at the one end, and the piston (36), at the other end, and is pulled together with the first wire (38) when the piston (36) is moved, thereby pulling the other end (18b) of the band (18) and the seat belt (16) at the same time.

4. The vehicle seat (10) according to claim 1, **characterized in that** the pre-tensioner (30) is connected by one end of a wire to a buckle (17) or a lap anchor (117) of the seat belt (16) and actuates an inflator (34) at an emergency, causing the inflator (34) to generate high-pressure gas, the high-pressure gas is supplied to a cylinder (32), moving in a piston (36) connected to other end of the first wire (38) in the cylinder (32), and the wire is pulled, whereby the buckle (17) or the lap anchor (117) is pulled, pulling the seat belt (16);
a slider (46) is slidably mounted on the cylinder (32) and the other end (18b) of the band (18) is connected to the slider (46); and
the other end (18b) of the band (18) is pulled together with the slider (46) as the piston (36) moves.

5. The vehicle seat (10) according to claim 4, **characterized in that** the pre-tensioner (30) has a main unit and a bracket (44) formed integral with the main unit and forked, having two side walls clamping the cylinder (32) from the left and the right, respectively, and a shaft (44b) extending between the free ends of the side walls and connected to the free ends of the side walls;
the cylinder (32) has two slits extending along the axis of the cylinder (32), from a middle part of the cylinder (32) to a distal end thereof;
the slider (46) includes a hollow cylindrical seal (46a) mounted on an outer surface of the cylinder (32) and able to slide thereon, and a cover provided in the cylinder (32), able to slide on the inner surface of the cylinder (32), closing the outer end of the seal (46a), having two arms (46b-1) pinching the seal at the left and right sides thereof;
the two arms (46b-1) of the cover extending slantwise and backward, passing through the slits on the cylinder (32), and positioned parallel to the side walls of the bracket (44); and
a shaft extends between, and is connected to, the distal ends of two arms (46b-1) and opposed to the shaft 44b of the bracket (44);
the other end (18b) of the band (18) is connected to the shaft of the slider (46) via the shaft 44b of the bracket (44);
the cover of the slider (46) is positioned in a direction the piston (36) moves; and
the wire extending from the piston (36) abuts on the cover when the piston (36) moves in the cylinder (32), pushing the cover, whereby the piston (36) moves together with the slider (46), pulling the other end (18b) of the band (18).

6. The vehicle seat (10) according to claim 1, **characterized in that** the pre-tensioner (30) is connected by one end of a wire to a buckle (17) or a lap anchor (117) of the seat belt (16) and actuates an inflator (34) at an emergency, causing the inflator (34) to generate high-pressure gas, the high-pressure gas is supplied to a cylinder (32), moving a piston (36) connected other end of the wire (38) in the cylinder (32), and the wire to the piston (36) is pulled, whereby the buckle (17) or the lap anchor (117) is pulled, pulling the seat belt (16);
a pantograph-shaped four-node link having the four axles is arranged between the pre-tensioner (30) and the buckle (17) or the lap anchor (117), in which two axles are positioned between the pre-tensioner (30) and the buckle (17) or the lap anchor (117); and
the other end (18b) of the band (18) is connected to one of two axles positioned between the pre-tensioner (30) and the buckle (17) or the lap anchor (117).

7. The vehicle seat (10) according to claim 1, **characterized in that** the pre-tensioner (30) is connected by one end of a wire to a buckle (17) or a lap anchor (117) of the seat belt (16) and actuates an inflator (34) at an emergency, causing the inflator (34) to generate high-pressure gas, the high-pressure gas is supplied to a cylinder (32), moving a piston (36) connected to other end of the wire (38) in the cylinder (32), and the wire is pulled, whereby the buckle (17) or the lap anchor (117) is pulled, pulling the seat belt (16);
a long piston (136) is provided in the cylinder (32) to operate in unison with the piston (36) to which the wire is connected; and
the other end (18b) of the band (18) is connected to the long piston (136) and is pulled as the long piston (136) moves.

8. The vehicle seat (10) according to claim 7, **characterized in that** the long piston (136) is arranged in the cylinder (32) and in front of the piston (36) with respect to the direction the piston (36) moves, and one end of the long piston (136) extends from the cylinder (32);
a support pillar (50) stands on other end of the long piston (136) and has a long slit extending in an axial direction of the support pillar; and
the other end (18b) of the band (18) passes through the long slit of the support pillar, is turned back, and is connected to the long piston (136).

9. The vehicle seat (10) according to claim 1, **characterized in that** the pre-tensioner (30) actuates an inflator (34) at an emergency, causing the inflator (34) to generate high-pressure gas, the high-pressure gas is supplied to a cylinder (32), moving a first piston (36-1) in the cylinder (32);
a first wire (38) is connected, at one end, to the piston (36) and is drawn into the cylinder (32) together with the piston (36) and, at the other end, to a pulley by a connector; and
a second wire (238) is connected, at one end, to a buckle (17) or a lap anchor (117) of the seat belt (16), and at the other end, to other end (18b) of the band (18), is wrapped around the pulley, to pull the seat belt (16) and other end (18b) of the band (18) at the same time as the piston (36) moves in the cylinder (32) and the first wire (38) is drawn in the cylinder (32).

10. The vehicle seat (10) according to claim 1, **characterized in that**
the pre-tensioner (30) is connected by a first wire (38) to a buckle (17) or a lap anchor (117) of the seat belt (16), actuates an inflator (34) at an emergency, causing the inflator (34) to generate high-pressure gas, the high-pressure gas is supplied to a first cylinder (32-1), moving a first piston (36-1) in the first cylinder (32-1), and a first wire (38) connected to the first piston (36-1) is pulled, whereby the buckle (17) or the lap anchor (117) is pulled, pulling the seat belt (16);
a second cylinder (32-2) is arranged in parallel to the first cylinder (32-1) and communicates with the first cylinder (32-1), and the high-pressure gas is supplied to the second cylinder (32-2), moving a second piston (36-2) in the second cylinder (32-2), and a second wire (338) is pulled, which is connected to the second piston (36-2) and to the other end (18b) of the band (18); and
the seat belt (16) and the other end (18b) of the band (18) are pulled at the same time as the first and second pistons (36-2) move.

## Patentansprüche

1. Ein Fahrzeugsitz (10) aufweisend ein Sitzpolster (14), mit einem Sitzkissen (14-2) und einem Paar Seitenrahmen (14-1), welche das Sitzpolster (14-2) von der linken und der rechten Seite her stützen;
ein Band (18), das sich zwischen den Seitenrahmen (14-1) erstreckt und an einem Ende an einem der Seitenrahmen (14-1) befestigt ist;
ein Richtungsänderungselement (14-1a), das am anderen Seitenrahmen (14-1) vorgesehen ist und ausgeführt ist, um die Richtung zu ändern, in welcher sich das andere Ende (18b) des Bands (18) erstreckt; und
einen Vorspanner (30), der mit dem anderen Ende (18b) des Bands (18) verbunden ist,
wobei das andere Ende (18b) des Bands (18) um das Richtungsänderungselement (14-1a) gewunden ist, dessen Erstreckungsrichtung geändert ist, wobei es sich vom Richtungsänderungselement (14-1a) zum Vorspanner (30) erstreckt, und der Vorspanner (30) das Band (18) in einem Notfall anzieht, **dadurch gekennzeichnet, dass** der Vorspanner (30) mit dem Sitzgurt (16) und mit dem anderen Ende (18b) des Bands (18) verbunden ist, und der Vorspanner (30) in einem Notfall das Band (18) gemeinsam mit dem Sitzgurt (16) anzieht,
das Band (18) erstreckt sich zwischen den Seitenrahmen (14-1), an einer unteren Fläche des Sitzkissens (14-2), und
der Vorspanner (30) zieht den Sitzgurt (16) im Notfall an, zieht und dehnt das Band (18) zwischen den Seitenrahmen (14-1), und hält dabei einen Passagier auf dem Fahrzeugsitz (10), schiebt das Sitzkissen (14-2) vor dem Gesäß des Passagiers hoch und bildet eine Barriere, welche verhindert, dass sich der Passagier nach vorne bewegt.

2. Der Fahrzeugsitz (10) gemäß Anspruch 1, **dadurch gekennzeichnet, dass** der Vorspanner (30) mit einem Ende eines Drahts mit einem Gurtschloss (17) oder einer Beckengurtverankerung (117) des Sitzgurts (16) verbunden ist und im Notfall einen Gasgenerator (34) auslöst, und damit den Gasgenerator (34) veranlasst, ein Hochdruckgas zu erzeugen, mit dem Hochdruckgas wird ein Zylinder (32) versorgt, welcher einen Kolben (36) im Zylinder (32) bewegt, der mit dem anderen Ende des Drahts (38) verbunden ist, und der Draht wird angezogen, wobei das Gurtschloss (17) oder die Beckengurtverankerung (117) angezogen wird und den Sitzgurt (16) anzieht; und
das andere Ende (18b) des Bands (18) ist mit dem Draht verbunden und wird zur selben Zeit gemeinsam mit angezogen, wenn der Draht angezogen wird.

3. Der Fahrzeugsitz (10) gemäß Anspruch 1, **dadurch gekennzeichnet, dass** der Vorspanner (30) mit einem Ende eines ersten Drahts mit einem Gurtschloss (17) oder einer Beckengurtverankerung (117) des Sitzgurts (16) verbunden ist und im Notfall einen Gasgenerator (34) auslöst, und damit den Gasgenerator (34) veranlasst, ein Hochdruckgas zu erzeugen, mit dem Hochdruckgas wird ein Zylinder (32) versorgt, welcher einen Kolben (36) im Zylinder (32) bewegt, der mit dem anderen Ende des ersten Drahts (38) verbunden ist, und der erste Draht, der mit dem Kolben (36) verbunden ist, wird angezogen, wobei das Gurtschloss (17) oder die Beckengurtverankerung (117) angezogen wird und den Sitzgurt (16) anzieht;
ein zweiter Draht (238) erstreckt sich parallel zum ersten Draht (38) und ist an dem einen Ende mit dem anderen Ende (18b) des Bands (18) verbunden, und der Kolben (36) wird am anderen Ende und gemeinsam mit dem ersten Draht (38) angezogen, wenn der Kolben (36) bewegt wird, wobei das andere Ende (18b) des Bands (18) und der Sitzgurt (16) zur gleichen Zeit angezogen werden.

4. Der Fahrzeugsitz (10) gemäß Anspruch 1, **dadurch gekennzeichnet, dass** der Vorspanner (30) mit einem Ende eines Drahts mit einem Gurtschloss (17) oder einer Beckengurtverankerung (117) des Sitzgurts (16) verbunden ist und im Notfall einen Gasgenerator (34) auslöst, und damit den Gasgenerator (34) veranlasst, ein Hochdruckgas zu erzeugen, mit dem Hochdruckgas wird ein Zylinder (32) versorgt, welcher einen Kolben (36) im Zylinder (32) bewegt, der mit dem anderen Ende des ersten Drahts (38) verbunden ist, und der Draht wird angezogen, wobei das Gurtschloss (17) oder die Beckengurtverankerung (117) angezogen wird und den Sitzgurt (16) anzieht;
ein Schieber (46) ist verschiebbar am Zylinder (32) montiert und das andere Ende (18b) des Bands (18) ist mit dem Schieber (46) verbunden; und
das andere Ende (18b) des Bands (18) wird gemeinsam mit dem Schieber (46) angezogen, wenn sich der Kolben (36) bewegt.

5. Der Fahrzeugsitz (10) gemäß Anspruch 4, **dadurch gekennzeichnet, dass** der Vorspanner (30) eine Haupteinheit und einen Halter (44) aufweist, welcher integral mit der Haupteinheit und gegabelt ausgeführt ist, mit zwei Seitenwänden, welche den Zylinder (32) von links bzw. rechts festklemmen, und eine Welle (44b), sich zwischen den freien Enden der Seitenwände erstreckt und mit den freien Wänden der Seitenwände verbunden ist;
der Zylinder (32) weist zwei Schlitze auf, welche sich entlang der Achse des Zylinders (32) erstrecken, von einem mittleren Bereich des Zylinders (32) zu einem davon entfernten Ende;
der Schieber (46) weist eine hohlzylindrische Hülse (46a) auf, die an einer äußeren Fläche des Zylinders (32) montiert und geeignet ist, darauf zu gleiten, und eine Abdeckung ist im Zylinder (32) vorgesehen, welche geeignet ist, an der inneren Fläche des Zylinders (32) zu gleiten, um das äußere Ende der Hülse (46a) zu verschließen, aufweisend zwei Arme (46b-1), welche die Hülse an deren linken und rechten Seite eng halten;
die beiden Arme (46b-1) der Hülse erstrecken sich schräg und rückwärts, gehen durch die Schlitze am Zylinder (32) und sind parallel zu den Seitenwänden des Halters (44) angeordnet; und
eine Welle erstreckt sich dazwischen und ist mit den entfernten Enden der zwei Arme (46b-1) gegenüber der Welle (44b) des Halters (44) verbunden;
das andere Ende (18b) des Bands (18) ist mit der Welle des Schiebers (46) über die Welle (44b) des Halters (44) verbunden;
die Abdeckung des Schiebers (46) ist in einer Richtung positioniert, in welcher sich der Kolben (36) bewegt; und
der Draht, der sich vom Kolben (36) aus erstreckt, stößt an die Abdeckung, wenn sich der Kolben (36) im Zylinder (32) bewegt und schiebt die Abdeckung an, wobei sich der Kolben (36) gemeinsam mit dem Schieber (46) bewegt, und das andere Ende (18b) des Bands (18) anzieht.

6. Der Fahrzeugsitz (10) gemäß Anspruch 1, **dadurch gekennzeichnet, dass** der Vorspanner (30) mit einem Ende eines Drahts mit einem Gurtschloss (17) oder einer Beckengurtverankerung (117) des Sitzgurts (16) verbunden ist und im Notfall einen Gasgenerator (34) auslöst, und damit den Gasgenerator (34) veranlasst, ein Hochdruckgas zu erzeugen, mit dem Hochdruckgas wird ein Zylinder (32) versorgt, welcher einen Kolben (36) im Zylinder (32) bewegt, der mit dem anderen Ende des Drahts (38) verbunden ist, und der Draht zum Kolben (36) wird angezogen, wobei das Gurtschloss (17) oder die Beckengurtverankerung (117) angezogen wird und den Sitzgurt (16) anzieht;
ein Pantograph-förmiger Vierknoten-Verbinder mit vier Achsen ist zwischen dem Vorspanner (30) und dem Gurtschloss (17) oder der Beckengurtverankerung (117) angeordnet, wobei zwei Achsen zwischen dem Vorspanner (30) und dem Gurtschloss (17) oder der Beckengurtverankerung (117) positioniert sind; und
das andere Ende (18b) des Bands (18) ist mit einer der zwei Achsen verbunden, die zwischen dem Vorspanner (30) und dem Gurtschloss (17) oder der Beckengurtverankerung (117) positioniert sind.

7. Der Fahrzeugsitz (10) gemäß Anspruch 1, **dadurch gekennzeichnet, dass** der Vorspanner (30) mit einem Ende eines Drahts mit einem Gurtschloss (17) oder einer Beckengurtverankerung (117) des Sitzgurts (16) verbunden ist und im Notfall einen Gasgenerator (34) auslöst, und damit den Gasgenerator (34) veranlasst, ein Hochdruckgas zu erzeugen, mit dem Hochdruckgas wird ein Zylinder (32) versorgt, welcher einen Kolben (36) im Zylinder (32) bewegt, der mit dem anderen Ende des Drahts (38) verbunden ist, und der Draht wird angezogen, wobei das Gurtschloss (17) oder die Beckengurtverankerung (117) angezogen wird und den Sitzgurt (16)anzieht;
ein langer Kolben (136) ist in dem Zylinder (32) vorgesehen, um im Einklang mit dem Kolben (36) zu operieren, mit dem der Draht verbunden ist;
das andere Ende (18b) des Bands (18) ist mit dem langen Kolben (136) verbunden und wird angezogen, wenn sich der lange Kolben (136) bewegt.

8. Der Fahrzeugsitz (10) gemäß Anspruch 7, **dadurch gekennzeichnet, dass** der lange Kolben (36) im Zylinder (32) angeordnet ist und sich vor dem Kolben (36) bezüglich der Richtung des Kolbens (36) bewegt und ein Ende des langen Kolbens (136) erstreckt sich vom Zylinder (32);
ein Stützpfeiler steht auf dem anderen Ende des langen Kolbens (136) und weist einen langen Schlitz auf, welcher sich in einer axialen Richtung des Stützpfeilers erstreckt; und
das andere Ende (18b) des Bands (18) geht durch den langen Schlitz des Stützpfeilers hindurch, wird zurückgedreht und ist mit dem langen Kolben (136) verbunden.

9. Der Fahrzeugsitz (10) gemäß Anspruch 1, **dadurch gekennzeichnet, dass** der Vorspanner (30) im Notfall einen Gasgenerator (34) auslöst, und damit den Gasgenerator (34) veranlasst, ein Hochdruckgas zu erzeugen, mit dem Hochdruckgas wird ein Zylinder (32) versorgt, welcher einen ersten Kolben (36-1) im Zylinder (32) bewegt;
ein erster Draht (38) ist an einem Ende mit dem Kolben (36) verbunden und wird gemeinsam mit dem Kolben (36) in den Zylinder (32) gezogen und, am anderen Ende durch einen Verbinder zu einer Umlenkrolle; und
ein zweiter Draht (238) ist an einem Ende mit einem Gurtschloss (17) oder einer Beckengurtverankerung (117) des Sitzgurts (16) verbunden, und am anderen Ende mit dem anderen Ende (18b) des Bands (18), ist um die Umlenkrolle geschlungen, um den Sitzgurt (16) und das andere Ende (18b) des Bands (18) anzuziehen, gleichzeitig wenn sich der Kolben (36) im Zylinder (32) bewegt und der erste Draht (38) in den Zylinder (32) gezogen wird.

10. Der Fahrzeugsitz (10) gemäß Anspruch 1, **dadurch gekennzeichnet, dass** der Vorspanner (30) mit einem Ende eines ersten Drahts (38) mit einem Gurtschloss (17) oder einer Beckengurtverankerung (117) des Sitzgurts (16) verbunden ist, im Notfall einen Gasgenerator (34) auslöst, und damit den Gasgenerator (34) veranlasst, ein Hochdruckgas zu erzeugen, mit dem Hochdruckgas wird ein erster Zylinder (32-1) versorgt, welcher einen ersten Kolben (36-1) im ersten Zylinder (32-1) bewegt, und ein erster Draht (38), der mit dem ersten Kolben (36-1) verbunden ist, wird angezogen, wobei das Gurtschloss (17) oder die Beckengurtverankerung (117) angezogen wird und den Sitzgurt (16) anzieht;
ein zweiter Zylinder (32-2) ist parallel zum ersten Zylinder (32-1) angeordnet und steht mit dem ersten Zylinder (32-1) in Verbindung, und der zweite Zylinder (32-1) wird mit dem Hochdruckgas versorgt, einen zweiten Kolben (36-2) im zweiten Zylinder (32-2) bewegend, und ein zweiter Draht (338) wird angezogen, welcher mit dem zweiten Kolben (36-2) und mit dem anderen Ende (18b) des Bands (18) verbunden ist; und
der Sitzgurt (16) und das andere Ende (18b) des Bands (18) werden gleichzeitig angezogen, wenn sich der erste und zweite Kolben (36-2) bewegen.

## Revendications

1. Siège de véhicule (10) comprenant
un coussin de siège (14) comportant une garniture de siège (14-2) et une paire de structures latérales (14-1) supportant la garniture de siège (14-2) à partir des côtés gauche et droit ;
une bande (18) s'étendant entre les structures latérales (14-1) et fixée, au niveau d'une première extrémité, sur l'une des structures latérales (14-1) ;
un élément de changement de direction (14-1a) agencé sur l'autre structure latérale (14-1) et configuré de manière à modifier la direction suivant laquelle s'étend l'autre extrémité (18b) de la bande (18) ; et
un dispositif de précharge (30) relié à l'autre extrémité (18b) de la bande (18), dans lequel l'autre extrémité (18b) de la bande (18) est enroulée autour de l'élément de changement de direction (14-1a), sa direction d'extension est modifiée, s'étendant ainsi à partir de l'élément de changement de direction (14-1a) vers le dispositif de précharge (30), et le dispositif de précharge (30) entraîne la bande (18) en cas d'urgence, **caractérisé en ce que**
le dispositif de précharge (30) est relié à la ceinture de siège (16) et à l'autre extrémité (18b) de la bande (18), et le dispositif de précharge (30) entraîne la bande (18) simultanément à la ceinture de siège (16) en cas d'urgence,
la bande (18) s'étend entre les structures latérales (14-1), au niveau d'une surface inférieure de la garniture de siège (14-2), et
le dispositif de précharge (30) entraîne la ceinture de siège (16) en cas d'urgence, entraînant et tendant la bande (18) entre les structures latérales (14-1), maintenant ainsi un occupant sur le siège de véhicule (10) en poussant vers le haut la garniture de siège (14-2) à l'avant des fesses de l'occupant et en formant une barrière empêchant l'occupant de se déplacer vers l'avant.

2. Siège de véhicule (10) selon la revendication 1, **caractérisé en ce que** le dispositif de précharge (30) est relié, par une première extrémité d'un câble, à une attache (17) ou un élément d'ancrage de boucle (117) de la ceinture de siège (16) et active un gonfleur (34) en cas d'urgence, provoquant la production de gaz à haute pression par le gonfleur (34), le gaz à haute pression est délivré à un vérin (32), déplaçant un piston (36) relié à l'autre extrémité du câble (38) dans le vérin (32), et le câble est entraîné, de telle sorte que l'attache (17) ou l'élément d'ancrage de boucle (117) est entraîné, entraînant la ceinture de siège (16) ; et
l'autre extrémité (18b) de la bande (18) est reliée au câble et est entraînée simultanément à celui-ci lorsque le câble est entraîné.

3. Siège de véhicule (10) selon la revendication 1, **caractérisé en ce que** le dispositif de précharge (30) est relié, par une première extrémité d'un premier câble (38), à une attache (17) ou un élément d'ancrage de boucle (117) de la ceinture de siège (16) et active un gonfleur (34) en cas d'urgence, provoquant la production de gaz à haute pression par le gonfleur (34), le gaz à haute pression est délivré à un vérin (32), déplaçant un piston (36) relié à l'autre extrémité du premier câble (38) dans le vérin (32), et le premier câble (38) relié au piston (36) est entraîné, de telle sorte que l'attache (17) ou l'élément d'ancrage de boucle (117) est entraîné, entraînant la ceinture de siège (16) ;
un second câble (238) s'étendant parallèlement au premier câble (38), est relié à l'autre extrémité (18b) de la bande (18), au niveau de la première extrémité, et au piston (36), au niveau de l'autre extrémité, et est entraîné simultanément au premier câble (38) lorsque le piston (36) est déplacé, entraînant ainsi l'autre extrémité (18b) de la bande (18) et la ceinture de siège (16) de manière simultanée.

4. Siège de véhicule (10) selon la revendication 1, **caractérisé en ce que** le dispositif de précharge (30) est relié, par une première extrémité d'un câble, à une attache (17) ou un élément d'ancrage de boucle (117) de la ceinture de siège (16) et active un gonfleur (34) en cas d'urgence, provoquant la production de gaz à haute pression par le gonfleur (34), le gaz à haute pression est délivré à un vérin (32), déplaçant un piston (36) relié à l'autre extrémité du premier câble (38) dans le vérin (32) et le câble est entraîné, de telle sorte que l'attache (17) ou l'élément d'ancrage de boucle (117) est entraîné, entraînant la ceinture de siège (16) ;
un coulisseau (46) est monté de manière à pouvoir coulisser sur le vérin (32) et l'autre extrémité (18b) de la bande (18) est reliée au coulisseau (46) ; et
l'autre extrémité (18b) de la bande (18) est entraînée simultanément au coulisseau (46) lorsque le piston (36) se déplace.

5. Siège de véhicule (10) selon la revendication 4, **caractérisé en ce que** le dispositif de précharge (30) comporte une unité principale et un support (44) formé de manière unitaire avec l'unité principale et en chape, présentant deux parois latérales bloquant le vérin (32) respectivement à partir de la gauche et de la droite, et un arbre (44b) s'étendant entre les extrémités libres des parois latérales et relié aux extrémités libres des parois latérales ;
le vérin (32) comporte deux fentes s'étendant suivant l'axe du vérin (32), à partir d'une partie centrale du vérin (32) vers une extrémité distale de celui-ci ;
le coulisseau (46) comporte un joint cylindrique creux (44b) monté sur une surface externe du vérin (32) et pouvant glisser sur celle-ci, et un couvercle agencé sur le vérin (32), pouvant coulisser sur la surface interne du vérin (32), refermant l'extrémité externe du joint (44b), comportant deux bras (46b-1) pinçant le joint au niveau de ses côtés gauche et droit ;
les deux bras (46b-1) du couvercle s'étendant de manière inclinée et vers l'arrière, passant à travers les fentes sur le vérin (32), et étant positionnés parallèlement aux parois latérales du support (44) ; et
un arbre s'étend entre les extrémités distales de deux bras (46b-1) et est relié à celles-ci, et est opposé à l'arbre (44b) du support (44) ;
l'autre extrémité (18b) de la bande (18) est reliée à l'arbre du coulisseau (46) par l'intermédiaire de l'arbre (44b) du support (44) ;
le couvercle du coulisseau (46) est positionné suivant une direction dans laquelle le piston (36) se déplace ; et
le câble s'étendant à partir du piston (36) vient en butée sur le couvercle lorsque le piston (36) se déplace dans le vérin (32), poussant le couvercle, de telle sorte que le piston (36) se déplace simultanément au coulisseau (46), entraînant l'autre extrémité (18b) de la bande (18).

6. Siège de véhicule (10) selon la revendication 1, **caractérisé en ce que** le dispositif de précharge (30) est relié, par une première extrémité d'un câble, à une attache (17) ou un élément d'ancrage de boucle (117) de la ceinture de siège (16) et active un gonfleur (34) en cas d'urgence, provoquant la production de gaz à haute pression par le gonfleur (34), le gaz à haute pression est délivré à un vérin (32), déplaçant un piston (36) relié à l'autre extrémité du câble (38) dans le vérin (32), et le câble sur le piston (36) est entraîné, de telle sorte que l'attache (17) ou l'élément d'ancrage de boucle (117) est entraîné, entraînant la ceinture de siège (16) ;
une liaison à quatre noeuds en forme de pantographe comportant les quatre axes est agencée entre le dispositif de précharge (30) et l'attache (17) ou l'élément d'ancrage de boucle (117), dans laquelle deux axes sont positionnés entre le dispositif de précharge (30) et l'attache (17) ou l'élément d'ancrage de boucle (117) ; et
l'autre extrémité (18b) de la bande (18) est reliée à l'un de deux axes positionnés entre le dispositif de précharge (30) et l'attache (17) ou l'élément d'ancrage de boucle (117).

7. Siège de véhicule (10) selon la revendication 1, **caractérisé en ce que** le dispositif de précharge (30) est relié par une extrémité d'un câble à une attache (17) ou un élément d'ancrage de boucle (117) de la ceinture de siège (16) et active un gonfleur (34) en cas d'urgence, provoquant la production de gaz à haute pression par le gonfleur (34), le gaz à haute pression est délivré à un vérin (32), déplaçant un piston (36) relié à l'autre extrémité du câble (38) dans le vérin (32), et le câble est entraîné, de telle sorte que l'attache (17) ou l'élément d'ancrage de boucle (117) est entraîné, entraînant la ceinture de siège (16) ;
un piston allongé (136) est agencé dans le vérin (32) afin de coopérer avec le piston (36) auquel le câble est relié ; et
l'autre extrémité (18b) de la bande (18) est reliée au piston allongé (136) et est entraînée lorsque le piston allongé (136) se déplace.

8. Siège de véhicule (10) selon la revendication 7, **caractérisé en ce que** le piston allongé (136) est agencé dans le vérin (32) et face au piston (36) par rapport à la direction de déplacement du piston (36), et une extrémité du piston allongé (136) s'étend à partir du vérin (32) ;
une colonne de support (50) se dresse sur l'autre extrémité du piston allongé (136) et comporte une fente allongée s'étendant dans une direction axiale de la colonne de support ; et
l'autre extrémité (18b) de la bande (18) passe à travers la fente allongée de la colonne de support, est retournée vers l'arrière et est reliée au piston allongé (136).

9. Siège de véhicule (10) selon la revendication 1, **caractérisé en ce que** le dispositif de précharge (30) active un gonfleur (34) en cas d'urgence, provoquant la production de gaz à haute pression par le gonfleur (34), le gaz à haute pression est délivré à un vérin (32), déplaçant un premier piston (36-1) dans le vérin (32) ;
un premier câble (38) est relié, au niveau d'une première extrémité, au piston (36) et est entraîné dans le vérin (32) simultanément au piston (36) et, au niveau de l'autre extrémité, à une poulie par un coupleur ; et
un second câble (238) est relié, au niveau d'une première extrémité, à une attache (17) ou un élément d'ancrage de boucle (117) de la ceinture de siège (16), et, au niveau de l'autre extrémité, à l'autre extrémité (18b) de la bande (18), est enroulé autour de la poulie, afin d'entraîner la ceinture de siège (16) et l'autre extrémité (18b) de la bande (18) simultanément lorsque le piston (36) se déplace dans le vérin (32), et le premier câble (38) est entraîné dans le vérin (32).

10. Siège de véhicule (10) selon la revendication 1, **caractérisé en ce que**
le dispositif de précharge (30) est relié par un premier câble (38) à une attache (17) ou un élément d'ancrage de boucle (117) de la ceinture de siège (16), active un gonfleur (34) en cas d'urgence, provoquant la production de gaz à haute pression par le gonfleur (34), le gaz à haute pression est délivré à un premier vérin (32-1), déplaçant un premier piston (36-1) dans le premier vérin (32-1), et un premier câble (38) relié au premier piston (36-1) est entraîné, de telle sorte que l'attache (17) ou l'élément d'ancrage de boucle (117) est entraîné, entraînant la ceinture de siège (16) ;
un second vérin (32-2) est agencé parallèlement au premier vérin (32-1) et communique avec le premier vérin (32-1), et le gaz à haute pression est délivré au second vérin (32-2), déplaçant un second piston (36-2) dans le second vérin (32-2), et un second câble (338) qui est relié au second piston (36-2) et à l'autre extrémité (18b) de la bande (18) est entraîné ; et
la ceinture de siège (16) et l'autre extrémité (18b) de la bande (18) sont entraînées simultanément lorsque les premier et second pistons (36-2) se déplacent.
